# EUROPEAN PATENT SPECIFICATION

(11) **EP 2 819 477 B1**
(45) Date of publication and mention of the grant of the patent: **06.03.2019**
(21) Application number: 13761681.9
(22) Date of filing: 14.03.2013
(51) Int. Cl.: H04L 5/00

(54) **METHOD, BASE STATION, AND USER EQUIPMENT FOR TRANSMITTING AND RECEIVING CONTROL INFORMATION**
VERFAHREN, BASISSTATION UND BENUTZERGERÄT ZUM SENDEN UND EMPFANGEN VON STEUERUNGSINFORMATIONEN
PROCÉDÉ, STATION DE BASE ET ÉQUIPEMENT D'UTILISATEUR POUR LA TRANSMISSION ET LA RÉCEPTION DE DONNÉES DE COMMANDE

(30) Priority: 14.03.2012 CN 201210067243
(43) Date of publication of application: 31.12.2014
(73) Proprietor: Huawei Device Co., Ltd., Dongguan, Guangdong 523808 (CN)
(72) Inventor: LI, Yingyang, Shenzhen Guangdong 518129 (CN)
(74) Representative: Körber, Martin Hans
(86) International application number: PCT/CN2013/072566
(87) International publication number: WO 2013/135179

(56) References cited:
- CN-A- 101 764 642
- CN-A- 102 186 251
- US-A1- 2012 020 323
- RESEARCH IN MOTION ET AL: "Multiplexing of Different DCI Messages", 3GPP DRAFT; R1-120331 (RIM- E-PDCCH MULTIPLEXING), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050562860, [retrieved on 2012-01-31]
- LG ELECTRONICS: "Considerations on RS for E-PDCCH", 3GPP DRAFT; R1-120447, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050562935, [retrieved on 2012-01-31]
- SHARP: "Configuration of UE-specific RS for ePDCCH", 3GPP DRAFT; R1-120279, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050562818, [retrieved on 2012-01-31]
- ALCATEL-LUCENT ET AL: "Further details of ePDCCH UE-specific search space design", 3GPP DRAFT; R1-120507 EPDCCH SEARCH SPACE DETAILS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 1 February 2012 (2012-02-01), XP050563228, [retrieved on 2012-02-01]
- NTT DOCOMO: "DM-RS Design for E-PDCCH in Rel-11", 3GPP DRAFT; R1-114302 DM-RS FOR E-PDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20111114 - 20111118, 9 November 2011 (2011-11-09), XP050562352, [retrieved on 2011-11-09]

## Description

### TECHNICAL FIELD

Embodiments of the present invention relate to a communications technology, and in particular, to a method for sending control information, a method for receiving control information, a base station, and a user equipment.

### BACKGROUND

In the conventional long term evolution (Long Term Evolution, LTE for short) system, a physical downlink control channel (Physical Downlink Control CHannel, PDCCH for short) based on a precoding transmission manner is introduced, that is, an enhanced (Enhanced) PDDCH (E-PDCCH for short). According to different mapping manners, the E-PDCCH can be classified into a localized E-PDCCH and a distributed E-PDCCH. The localized E-PDCCH is mapped to a resource block (Resource Block, RB for short) pair or a group of adjacent RB pairs in a centralized manner. A base station can send the localized E-PDCCH over an RB pair with a relatively good channel condition according to a channel status reported by a user equipment (User Equipment, UE for sort), thereby obtaining a frequency scheduling gain. The distributed E-PDCCH is mapped to multiple RB pairs in a dispersed manner, thereby obtaining a frequency diversity gain.

Regardless of the localized E-PDCCH and the distributed E-PDCCH, two parts of contents need to be transmitted over time-frequency resources, that is, a reference signal part and a data symbol part. To perform a blind detection for a candidate E-PDCCH in a search space, a UE can perform channel estimation based on a reference signal part of the candidate E-PDCCH, perform demodulation on a data part of the candidate E-PDCCH, and then perform operations such as decoding and cyclic redundancy check (Cyclic Redundancy Check, CRC for short) to determine whether the candidate E-PDCCH is sent to the UE.

For the localized E-PDCCH, however, if multiple candidate E-PDCCHs in the search space are mapped into a same RB pair or a same group of RB pairs, a case where multiple candidate E-PDCCHs are all unavailable often occurs. Consequently, the base station fails to send an E-PDCCH to the UE.

In Research in Motions "Multiplexing of Different DCI Messages" 3GPP Draft R1-120331 of 3GPP TSG RAN WG1 Meeting #68, an E-PDCCH multiplexing based on eCCE for distributed transmission is described. Therein a new scheduling unit should be defined such that it is comparable in size to a CCE and multiple such units may be transmitted in a PRB or PRB pair. In this scheme, either transmit diversity or beamforming may be used for E-PDCCH transmission. For localized transmission it is proposed to exclusively use a single E-PDCCH transmission with a random beamforming on a PRB-basis. A separate DMRS port may be used for the demodulation of each scheduling unit within a PRB or PRB pair.

In LG Electronics "Considerations on RS for E-PDCCH" 3GPP Draft R1-120447 of 3GPP TSG RAN WG1 Meeting #68, a configurability of DMRS for E-PDCCH is proposed wherein an orthogonal time/frequency resource occupation with separated antenna ports is suggested.

In Sharps "Configuration of UE-specific RS for E-PDCCH" 3GPP Draft R1-120279 of 3GPP TSG RAN WG1 Meeting #68, a linkage between UE-RS and E-PDCCH REs is described. Therein an antenna port for demodulation of E-PDCCH is linked to indices of regions, wherein the linkage is fixed, UE-specifically configured or UE-specific port mapping is proposed. In the UE-specifically configured method, also orthogonal antenna ports are selected. In the UE-specific port mapping method a certain region can only be demodulated by a restricted UE.

In Alcatel-Lucents "Further details of E-PDCCH UE-specific search space design" 3GPP Draft R1-120507 of 3GPP TSG RAN WG1 Meeting #68, it is proposed that the maximum number of blind decodings for E-PDCCHs should be agreed and configured independently of the number of antenna ports. An offset size from a starting position index could be semi-statically configurable.

### SUMMARY

Embodiments of the present invention provide a method for sending control information, a method for receiving control information, a base station, and a user equipment.

The invention is defined by the independent claims. In the following description, any embodiment(s) referred to and not falling within the scope of the appended claims, is (are) merely example(s) useful to the understanding of the invention.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show some embodiments of the present invention, and persons of ordinary skill in the art may still derive other drawings according to these accompanying drawings without creative efforts.
FIG. 1 is a flowchart of Embodiment 1 of a method for sending control information according to the present invention;
FIG. 2 is a flowchart of Embodiment 1 of a method for receiving control information according to the present invention;
FIG. 3 is a flowchart of Embodiment 2 of a method for sending control information according to the present invention;
FIG. 4 is a flowchart of Embodiment 2 of a method for receiving control information according to the present invention;
FIG. 5 is a schematic structural diagram of Embodiment 1 of a base station according to the present invention;
FIG. 6 is a schematic structural diagram of Embodiment 2 of a base station according to the present invention;
FIG. 7 is a schematic structural diagram of Embodiment 3 of a base station according to the present invention;
FIG. 8 is a schematic structural diagram of Embodiment 4 of a base station according to the present invention;
FIG. 9 is a schematic structural diagram of Embodiment 5 of a base station according to the present invention;
FIG. 10 is a schematic structural diagram of Embodiment 6 of a base station according to the present invention;
FIG. 11 is a schematic structural diagram of Embodiment 7 of a base station according to the present invention;
FIG. 12 is a schematic structural diagram of Embodiment 1 of a user equipment according to the present invention;
FIG. 13 is a schematic structural diagram of Embodiment 2 of a user equipment according to the present invention;
FIG. 14 is a schematic structural diagram of Embodiment 3 of a user equipment according to the present invention;
FIG. 15 is a schematic structural diagram of Embodiment 4 of a user equipment according to the present invention;
FIG. 16 is a schematic structural diagram of Embodiment 5 of a user equipment according to the present invention;
FIG. 17 is a schematic structural diagram of Embodiment 6 of a user equipment according to the present invention;
FIG. 18 is a schematic structural diagram of Embodiment 7 of a user equipment according to the present invention;
FIG. 19 is a schematic structural diagram of Embodiment 8 of a base station according to the present invention;
FIG. 20 is a schematic structural diagram of Embodiment 9 of a base station according to the present invention;
FIG. 21 is a schematic structural diagram of Embodiment 10 of a base station according to the present invention;
FIG. 22 is a schematic structural diagram of Embodiment 11 of a base station according to the present invention;
FIG. 23 is a schematic structural diagram of Embodiment 8 of a user equipment according to the present invention;
FIG. 24 is a schematic structural diagram of Embodiment 9 of a user equipment according to the present invention;
FIG. 25 is a schematic structural diagram of Embodiment 10 of a user equipment according to the present invention; and
FIG. 26 is a schematic structural diagram of Embodiment 11 of a user equipment according to the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

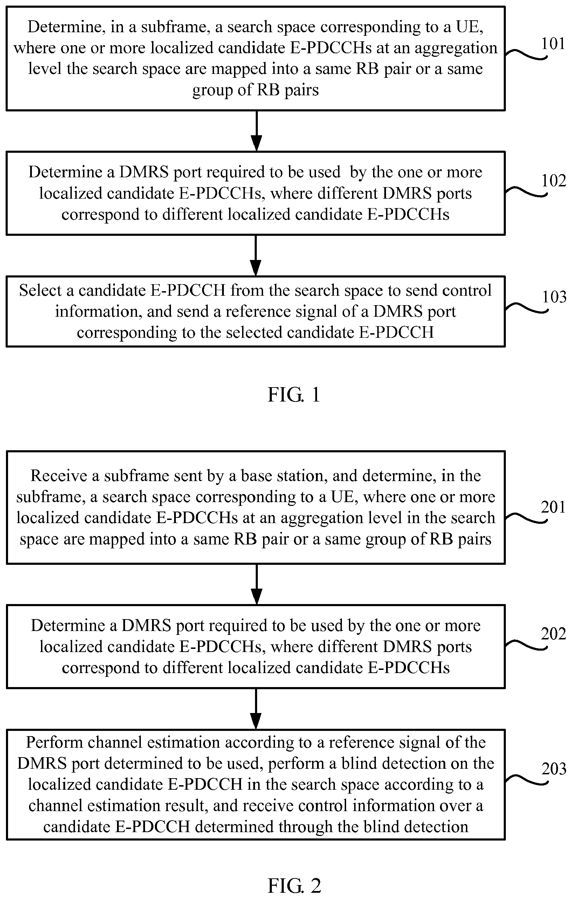

FIG. 1 is a flowchart of Embodiment 1 of a method for sending control information according to the present invention. As shown in FIG. 1, the method in this embodiment may include:
Step 101: Determine, in a subframe, a search space corresponding to a UE, where one or more localized candidate E-PDCCHs at an aggregation level in the search space are mapped into within a same RB pair or a same group of RB pairs.
Step 102: Determine a DMRS port required to be used by the one or more localized candidate E-PDCCHs, where different DMRS ports correspond to different localized candidate E-PDCCHs.
Step 103: Select a candidate E-PDCCH from the search space to send control information, and send a reference signal of a DMRS port corresponding to the selected candidate E-PDCCH.

It should be noted that an execution body of steps 101 to 103 is a base station.

Specifically, an E-PDCCH and a physical downlink shared channel (Physical Downlink Shared Channel, PDSCH for short) are multiplexed in a data area of a subframe in a frequency-division multiplexing (Frequency-division Multiplexing, FDM for short) manner. A group of RB pairs resources used for the E-PDCCH may be configured for a cell, so that each UE within the cell knows all the RB pair resources used for the E-PDCCH and configured by the base station; or each UE may be respectively configured with an RB pair resource used for E-PDCCH transmission, for example, radio resource control (Radio Resource Control, RRC for short) signaling, that is, RB pair resources for the E-PDCCH that need to be detected by different UEs may be different. A candidate E-PDCCH in a search space corresponding to a UE may be only distributed on a part of RB pairs among RB pair resources used for E-PDCCH transmission.

There may be a large quantity of resource elements (Resource Element, RE for short), within an RB pair, used for a data part of E-PDCCH transmission. Using all the REs to transmit control information of the same UE is not economical. Therefore, similar to a concept of a control channel element (Control Channel Element, CCE for short) in a PDCCH, the REs may be divided into multiple enhanced control channel elements (Enhanced control channel element, eCCE for short) of the E-PDCCH. The E-PDCCH is formed by one or more eCCEs through aggregation. For the E-PDCCH at an aggregation level L, the E-PDCCH is formed by L aggregated eCCEs. That each eCCE must be provided with the same quantity of REs is not limited here. L is an integer that is greater than 0.

The foregoing description is similarity of a localized E-PDCCH and a distributed E-PDCCH. A difference between a localized E-PDCCH and a distributed E-PDCCH, however, is that a reference signal of the distributed E-PDCCH is shared by multiple UEs, while E-PDCCHs of different UEs are distinguished by eCCEs. Therefore, in a search space corresponding to the UE, only a position of an eCCE of a candidate E-PDCCH for blind detection performed by the UE needs to be determined, while reference signals corresponding to different UEs do not need to be determined; and for the localized E-PDCCH, a reference signal is dedicated to a certain UE, in an E-PDCCH search space corresponding to a UE, a reference signal and an eCCE occupied by a candidate E-PDCCH need to be determined at the same time, and a demodulation reference signal (Demodulation Reference Signal, DMRS for short) port is also determined when the reference signal is determined.

For the localized candidate E-PDCCHs at an aggregation level, a situation in which, in a search space corresponding to the UE, one or more localized candidate E-PDCCHs are mapped into the same RB pair or the same group of RB pairs may occur. Specifically, whether one or more localized candidate E-PDCCHs are mapped into one RB pair or a group of RB pairs is determined by a configuration method of the search space. If multiple localized candidate E-PDCCHs at the same aggregation level, mapped into the same RB pair or group of RB pairs, use the same reference signal of a DMRS port, multiple localized candidate E-PDCCHs of the UE are all unavailable once the DMRS port is occupied by an E-PDCCH of another UE. As a result, the base station fails to send an E-PDCCH to the UE within the RB pair or the group of RB pairs.

Therefore, in this embodiment, a base station may determine, in a subframe, a search space corresponding to a UE, and the search space is used by the UE to perform a blind detection on a localized candidate E-PDCCH. Then, for an E-PDCCH aggregation level, if one or more localized candidate E-PDCCHs in the search space are mapped into an RB pair, the base station may determine a DMRS port required to be used by the one or more localized candidate E-PDCCHs, and different DMRS ports correspond to different localized candidate E-PDCCHs, that is, these localized candidate E-PDCCHs at the same aggregation level are enabled to use reference signals of different DMRS ports, thereby ensuring that the localized candidate E-PDCCHs at the same aggregation level within a same RB pair are mutually independent and avoiding a problem that multiple candidate E-PDCCHs of the UE are simultaneously unavailable because multiple localized candidate E-PDCCHs at a same aggregation level share a same DMRS port.

It should be noted that, in step 101 in the embodiment of the method for sending control information, a specific implementation process for determining a search space is as follows:
RB pair resources used for E-PDCCH transmission are configured, and then the RB pair resources are divided into eCCEs. The eCCEs are numbered. The total number of eCCEs is recorded as *N_{CCE}.* For aggregation level L, L successive eCCEs form a localized candidate E-PDCCH. According to a tree structure, an index of a start eCCE of the n^{th} localized candidate E-PDCCH may be *L*·(*n* mod└*N*_{CCE}/*L*┘) or may be (*n*·*L*)mod *N*_{CCE}. After the index of the start eCCE of the n^{th} localized candidate E-PDCCH is determined, L successive eCCEs that form the n^{th} localized candidate E-PDCCH may be determined. For an aggregation level, a search space corresponding to a UE is a subset of a candidate E-PDCCH defined above.

In addition, the embodiments of the present invention do not limit a specific implementation process for determining a search space. Persons skilled in the art may set a search space according to a requirement.

To achieve the technical solutions in the embodiment of the method for sending control information, the embodiments of the present invention provide the following technical solutions for a base station to determine a DMRS port:
Solution 1: For all RB pair resources used for E-PDCCH transmission, a DMRS port used by each corresponding localized candidate E-PDCCH is determined respectively.

For example, if the number of available DMRS ports is recorded as P, each localized candidate E-PDCCH circularly uses a reference signal of the P DMRS ports in sequence. For an aggregation level, the n^{th} localized candidate E-PDCCH uses the ((*n*+*σ*)mod *P*)^{th} DMRS port. *σ* is an offset value associated with a UE identifier and an aggregation level. Therefore, DMRS ports mapped to candidate E-PDCCHs of different UEs or at different aggregation levels are different. For example, in LTE release 11, P may be equal to 4, that is, DMRS ports 7 to 10 may be used for reference signals of E-PDCCHs. Therefore, the n^{th} localized candidate E-PDCCH uses DMRS port 7+(*n*+*σ*)mod *P*.

In this solution, a mapping relationship between each localized candidate E-PDCCH and a used DMRS port may be instructed by signaling or may be determined in an implicit method, that is, the mapping relationship is determined according to some parameters such as a cell identifier, a UE identifier, and an aggregation level instead of being instructed by a signal. The mapping relationship may be specific to a cell, for example, broadcast signaling, that is, all UEs in the cell work according to the same mapping relationship; and the mapping relationship may also be specific to a UE, for example, RRC signaling, that is, different UEs may be provided with different mapping relationships.

Solution 2: For an aggregation level, a DMRS port used by each corresponding localized candidate E-PDCCH in the search space is determined respectively.

For example, if the number of available DMRS ports is recorded as P, each localized candidate E-PDCCH in the search space circularly uses a reference signal of the P DMRS ports in sequence. For an aggregation level, the n^{th} localized candidate E-PDCCH in the search space uses the ((*n*+*σ*)mod *P*)^{th} DMRS port. *σ* is an offset value associated with a UE identifier and an aggregation level. Therefore, DMRS ports mapped to E-PDCCHs of different UEs or at different aggregation levels in the search space are different. For example, in LTE release 11, P may be equal to 4, that is, DMRS ports 7 to 10 may be used for reference signals of E-PDCCHs. For aggregation level L, if the search space is recorded to include M localized candidate E-PDCCHs at aggregation level L, the n^{th} localized candidate E-PDCCH in the search space uses DMRS port 7+(*n*+*σ*)mod *P*, where *n* = 0,...,*M*-1. M is an integer greater than 0.

In this solution, at each aggregation level, a mapping relationship between a localized candidate E-PDCCH and a used DMRS port may be instructed by signaling or may be determined in an implicit method, that is, the mapping relationship is determined according to some parameters such as a cell identifier, a UE identifier, and an aggregation level instead of being instructed by a signal. The mapping relationship may be specific to a cell, for example, broadcast signaling, that is, all UEs in the cell work according to the same mapping relationship; and the mapping relationship may also be specific to a UE, for example, RRC signaling, that is, different UEs may be provided with different mapping relationships.

Solution 3: Mapping relationships between eCCEs of all RB pair resources used for an E-PDCCH and a DMRS port are determined, and then a DMRS port used by the localized candidate E-PDCCH at each aggregation level is determined.

For example, if the number of available DMRS ports is recorded as P, each eCCE may be determined to circularly use a reference signal of the P DMRS ports in sequence. In LTE release 11, P may be equal to 4, that is, DMRS ports 7 to 10 may be used for reference signals of E-PDCCHs. For example, for a UE, a DMRS port corresponding to the i^{th} eCCE is 7+(*i*+*σ*)mod *P*, and *σ* is an offset value specific to a user.

Then, for aggregation level 1, a UE may directly acquire, according to a DMRS port to which an eCCE is mapped, a reference signal used by a localized candidate E-PDCCH formed by the eCCE. For aggregation level L, for example, L=2, 4, or 8, the UE may determine a localized candidate E-PDCCH to use a DMRS port corresponding to an eCCE, for example the eCCE with the smallest index, occupied by the localized candidate E-PDCCH.

In this solution, a mapping relationship between each eCCE and a DMRS port may be instructed by signaling or may be determined in an implicit method, that is, the mapping relationship is determined according to some parameters such as a cell identifier, a UE identifier, and an aggregation level instead of being instructed by a signal. The mapping relationship may be specific to a cell, for example, broadcast signaling, that is, all UEs in the cell work according to the same mapping relationship; and the mapping relationship may also be specific to a UE, for example, RRC signaling, that is, different UEs may be provided with different mapping relationships.

Solution 4: A mapping relationship between an eCCE of each RB pair and a DMRS port is determined, and then the DMRS port used by a localized candidate E-PDCCH at each aggregation level is determined.

For example, if the number of available DMRS ports is recorded as P, each eCCE of an RB pair may be defined to circularly use a reference signal of the P DMRS ports in sequence. In LTE release 11, P may be equal to 4, that is, DMRS ports 7 to 10 may be used for reference signals of E-PDCCHs. For example, for a UE, a DMRS port corresponding to the i^{th} eCCE within an RB pair is 7+(*i*+*σ*)mod *P*. *σ* is an offset value associated with a UE identifier and an RB pair index.

For aggregation level 1, a UE may directly acquire, according to a DMRS port to which an eCCE is mapped, a reference signal used by a localized candidate E-PDCCH formed by the eCCE. For aggregation level L, for example, L is equal to 2, 4, or 8, the UE may determine a localized candidate E-PDCCH to use a DMRS port corresponding to an eCCE, for example the eCCE with the smallest index, occupied by the localized candidate E-PDCCH.

A mapping relationship between an eCCE and a DMRS port may be instructed by signaling or may be determined in an implicit method, that is, the mapping relationship is determined according to some parameters such as a cell identifier and a UE identifier instead of being instructed by a signal. The mapping relationship in different RB pairs may be the same or different mapping relationships may be respectively defined for each RB pair. For each RB pair, the mapping relationship may be specific to a cell, for example, broadcast signaling, that is, all UEs in the cell work according to the same mapping relationship; and the mapping relationship may also be specific to a UE, for example, RRC signaling, that is, different UEs may be provided with different mapping relationships.

Solution 5: Each RB pair corresponds to a reference DMRS port. For an aggregation level, each candidate E-PDCCH within an RB pair in a search space corresponding to a UE respectively uses a different DMRS port which is determined according to the reference DMRS port.

For example, if the number of available DMRS ports is recorded as P, each RB pair allocated for an E-PDCCH may use different reference DMRS ports. For example, the reference DMRS ports of each RB pair are defined to circularly use reference signals of the P DMRS ports in sequence. For example, in LTE release 11, P may be equal to 4, that is, DMRS ports 7 to 10 may be used for reference signals of E-PDCCHs. A reference DMRS port of an RB pair may be determined as *p* = 7+(*i*+*σ*)mod *P*, i is an RB pair index allocated for the E-PDCCH, and *σ* is a specific offset value of a UE; or reference DMRS ports of all RB pairs allocated for the E-PDCCH may be defined to be the same, that is, the reference DMRS port is *p* = *σ*, and *σ* is a specific offset value of a UE. For E-PDCCHs at an aggregation level, if only a localized candidate E-PDCCH in a search space is mapped into an RB pair, reference DMRS port *p* is used to transmit a reference signal of the DMRS port. For E-PDCCHs at an aggregation level, if multiple localized candidate E-PDCCHs in a search space are mapped into an RB pair, the number of the localized candidate E-PDCCHs is recorded as C. The C localized candidate E-PDCCHs respectively use different DMRS ports determined according to reference DMRS port *p*. For example, according to a sequence of eCCEs, with the smallest indexes, occupied by the C localized candidate E-PDCCH within the RB pair, or according to a sequence of localized candidate E-PDCCHs mapped into the RB pair when a search space corresponding to a UE is defined, the i^{th} localized candidate E-PDCCH may use DMRS port 7+(*p*-7+*i*)mod *P* within the RB pair, where *i* = 0,...,*C*-1.

In this solution, reference DMRS port *p* may be instructed by signaling or may be determined in an implicit method, that is, reference DMRS port *p* is determined according to some parameters such as a cell identifier and a UE identifier instead of being instructed by a signal. Reference DMRS port *p* in different RB pairs may be the same or different reference DMRS ports *p* may be respectively defined for each RB pair. For an RB pair, the reference DMRS port *p* may be specific to a cell, for example, broadcast signaling, that is, all UEs in the cell work according to the same reference DMRS port *p* ; and the reference DMRS port *p* may also be specific to a UE, for example, RRC signaling, that is, different UEs may be provided with different reference DMRS ports *p*.

In this solution, when each of different aggregation levels has a localized candidate E-PDCCH mapped to the same RB pair, a DMRS port used by the localized candidate E-PDCCHs may be ensured consistent. Therefore, the UE may perform channel estimation only once to demodulate eCCEs of the E-PDCCHs at multiple aggregation levels. Alternatively, when a localized candidate E-PDCCH is mapped to multiple adjacent RB pairs, if joint channel estimation is enabled for different RB pairs to enhance channel estimation performance, it may be determined that for this type of localized candidate E-PDCCH that is mapped to multiple adjacent RB pair, a DMRS port to be used is determined according to a reference DMRS port in an RB pair among multiple RB pairs in a unified manner, for example, a DMRS port to be used is determined according to an RB pair with the smallest index, thereby simplifying complexity of channel estimation.

Solution 6: Each group of RB pairs corresponds to a reference DMRS port. For an aggregation level, each candidate E-PDCCH within a group of RB pairs in a search space corresponding to a UE respectively uses a different DMRS port which is determined according to the reference DMRS port.

In this solution, a group of RB pairs may refer to a subband, a resource block group (Resource Block Group, RBG for short), or a group of RB pairs that supports joint channel estimation reported in channel status information (Channel Status Information, CSI for short). Reference DMRS port *p* may be instructed by signaling or may be determined in an implicit method, that is, reference DMRS port *p* is determined according to some parameters such as a cell identifier and a UE identifier instead of being instructed by a signal. Reference DMRS port *p* in different groups of RB pairs may be the same or different reference DMRS ports *p* may be respectively defined for each group of RB pairs. For a group of RB pairs, the reference DMRS port *p* may be specific to a cell, for example, broadcast signaling, that is, all UEs in the cell work according to the same reference DMRS port *p*; and the reference DMRS port *p* may also be specific to a UE, for example, RRC signaling, that is, different UEs may be provided with different reference DMRS ports *p*.

For example, if the number of available DMRS ports is recorded as P, each group of RB pairs allocated for an E-PDCCH may use different reference DMRS ports. For example, in LTE release 11, P may be equal to 4, that is, DMRS ports 7 to 10 may be used for reference signals of E-PDCCHs. A reference DMRS port of a group of RB pairs may be defined as *p*=7+(*i*+*σ*)mod *P*, i is an RB pair group index allocated for the E-PDCCH, and *σ* is a specific offset value of a UE; or reference DMRS ports of all groups of RB pairs are the same, that is, the reference DMRS port is *p*=*σ*, and *σ* is a specific offset value of a UE. For E-PDCCHs at an aggregation level, if only a localized candidate E-PDCCH is mapped into a group of RB pairs, DMRS port *p* is used to transmit a reference signal of the DMRS port. For E-PDCCHs at an aggregation level, if multiple localized candidate E-PDCCHs in a search space corresponding to the UE are mapped into the group of RB pairs, the number of the localized candidate E-PDCCHs is recorded as C. The C localized candidate E-PDCCHs respectively use different DMRS ports determined according to reference DMRS port *p*. For example, according to a sequence of eCCEs with the smallest indexes occupied by the C localized candidate E-PDCCH within the group of RB pairs, or according to a sequence of localized candidate E-PDCCHs mapped into the group of RB pairs when a search space corresponding to a UE is determined, the i^{th} localized candidate E-PDCCH may use DMRS port 7+(*p*-7+*i*)mod *P* within the group of RB pairs, where *i*=0,...,*C*-1.

By using this solution, when localized candidate E-PDCCHs at different aggregation levels are mapped into the same group of RB pairs, a DMRS port used by the localized candidate E-PDCCHs may be ensured consistent. Therefore, the UE may perform channel estimation only once to demodulate eCCEs of the E-PDCCHs at multiple aggregation levels.

The foregoing content describes the implementation process of Embodiment 1 of a method for sending control information according to the present invention, and the specific implementation is on a base station side. Correspondingly, the following describes a corresponding implementation solution on a UE side.

FIG. 2 is a flowchart of Embodiment 1 of a method for receiving control information according to the present invention. As shown in FIG. 2, the method in this embodiment may include:
Step 201: Receive a subframe sent by a base station, and determine, in the subframe, a search space corresponding to a UE, where one or more localized candidate E-PDCCHs at an aggregation level in the search space are mapped into a same RB pair or a same group of RB pairs.
Step 202: Determine a DMRS port required to be used by the one or more localized candidate E-PDCCHs, where different DMRS ports correspond to different localized candidate E-PDCCHs.
Step 203: Perform channel estimation according to a reference signal of the DMRS port determined to be used, perform a blind detection on the localized candidate E-PDCCH in the search space according to a channel estimation result, and receive control information over a candidate E-PDCCH determined through the blind detection.

It should be noted that an execution body of steps 201 to 203 is a user equipment.

Specifically, for a subframe, a UE may determine a search space, in the subframe, used to perform a blind detection on a localized candidate E-PDCCH. Then, for an E-PDCCH aggregation level, if one or more localized candidate E-PDCCHs in the search space are mapped into an RB pair, the UE may determine a DMRS port required to be used by the one or more localized candidate E-PDCCHs, and different DMRS ports correspond to different localized candidate E-PDCCHs, that is, these localized candidate E-PDCCHs at the same aggregation level are enabled to use reference signals of different DMRS ports when the UE performs channel estimation. Therefore, the localized candidate E-PDCCHs at the same aggregation level within a same RB pair are independent, thereby avoiding a problem that multiple candidate E-PDCCHs of the UE are simultaneously unavailable because multiple localized candidate E-PDCCHs at a same aggregation level share a same DMRS port.

It should be noted that, in step 201 in the embodiment of the method for receiving control information, a specific implementation process for determining a search space is as follows:
A UE may know a definition of a search space by a base station in advance and determine, according to the definition of the search space, a localized candidate E-PDCCH that requires blind detection. Specifically, for aggregation level L, according to a tree structure, an index of a start eCCE of the n^{th} localized candidate E-PDCCH may be *L*·(*n*mod└*N*_{CCE}/*L*┘) or may be (*n*·*L*)mod *N*_{CCE}. After the index of the start eCCE of the n^{th} localized candidate E-PDCCH is determined, L successive eCCEs that form the n^{th} localized candidate E-PDCCH may be determined. For aggregation level L, a search space corresponding to a UE is a subset of a candidate E-PDCCH defined above.

In addition, the embodiments of the present invention do not limit a specific implementation process for determining a search space by a UE. Persons skilled in the art may set a search space corresponding to a UE according to a requirement, and an only requirement is that the UE and the base station use the same definition of the search space.

To achieve the foregoing technical solutions of the embodiment of the method for receiving control information, the embodiments of the present invention provide the following technical solutions to achieve step 202 in which a DMRS port is determined. Each technical solution is in a one-to-one correspondence relationship to the foregoing technical solutions for determining a DMRS port on a base station side.

Solution 1: According to a mapping relationship between each localized candidate E-PDCCH of all RB pair resources used for E-PDCCH transmission and a corresponding used DMRS port, the DMRS port used by a localized candidate E-PDCCH at an aggregation level in a search space corresponding to a UE is determined.

For example, if the number of available DMRS ports is recorded as P, for an RB pair resource used for E-PDCCH transmission, each localized candidate E-PDCCH circularly uses a reference signal of the P DMRS ports in sequence.

In this mapping relationship, for an aggregation level, the n^{th} localized candidate E-PDCCH uses the ((*n*+*σ*)mod *P*)^{th} DMRS port. *σ* is an offset value associated with a UE identifier and an aggregation level. Therefore, DMRS ports mapped to candidate E-PDCCHs of different UEs or at different aggregation levels are different. For example, in LTE release 11, P may be equal to 4, that is, DMRS ports 7 to 10 may be used for reference signals of E-PDCCHs. Therefore, the n^{th} localized candidate E-PDCCH uses DMRS port 7+(*n*+*σ*)mod *P*.

In this solution, a UE may receive notification signaling sent by a base station to acquire a mapping relationship between each localized candidate E-PDCCH and a used DMRS port or may determine the mapping relationship according to some parameters such as a cell identifier, a UE identifier, and an aggregation level instead of being instructed by the base station. The mapping relationship may be specific to a cell, for example, broadcast signaling, that is, all UEs in the cell work according to the same mapping relationship; and the mapping relationship may also be specific to a UE, for example, RRC signaling, that is, different UEs may be provided with different mapping relationships.

Solution 2: According to a mapping relationship between each localized candidate E-PDCCH at an aggregation level in the search space corresponding to a UE and a corresponding used DMRS port, the DMRS port used by the localized candidate E-PDCCH at the aggregation level in the search space corresponding to the UE is determined.

For example, if the number of available DMRS ports is recorded as P, each localized candidate E-PDCCH in the search space corresponding to the UE circularly uses a reference signal of the P DMRS ports in sequence. For an aggregation level, the n^{th} localized candidate E-PDCCH in the search space corresponding to the UE uses the ((*n*+*σ*)mod *P*)^{th} DMRS port. *σ* is an offset value associated with a UE identifier and an aggregation level. Therefore, DMRS ports mapped to E-PDCCHs of different UEs or at different aggregation levels in the search space are different. For example, in LTE release 11, P may be equal to 4, that is, DMRS ports 7 to 10 may be used for reference signals of E-PDCCHs. For aggregation level L, if M localized candidate E-PDCCHs at aggregation level L are recorded to be included in the search space corresponding to the UE, the n^{th} localized candidate E-PDCCH in the search space uses DMRS port 7+(*n*+*σ*)mod *P*, where *n* = 0,...,*M*-1.

In this solution, for each aggregation level, a base station may instruct a mapping relationship between an localized candidate E-PDCCH and a used DMRS port by using signaling or the UE may determine the mapping relationship according to some parameters such as a cell identifier, a UE identifier, and an aggregation level instead of being instructed. The mapping relationship may be specific to a cell, for example, broadcast signaling, that is, all UEs in the cell work according to the same mapping relationship; and the mapping relationship may also be specific to a UE, for example, RRC signaling, that is, different UEs may be provided with different mapping relationships.

Solution 3: According to a mapping relationship between an eCCE of an RB pair resource used for an E-PDCCH and a DMRS port, the DMRS port used by the localized candidate E-PDCCH at each aggregation level is determined.

For example, if the number of available DMRS ports is recorded as P, each eCCE in the search space corresponding to the UE circularly uses a reference signal of the P DMRS ports in sequence. In LTE release 11, P may be equal to 4, that is, DMRS ports 7 to 10 may be used for reference signals of E-PDCCHs. For example, for a UE, a DMRS port corresponding to the i^{th} eCCE is 7+(*i*+*σ*)mod *P*, and *σ* is an offset value specific to a user.

For aggregation level 1, a UE may directly acquire, according to a DMRS port to which an eCCE is mapped, a reference signal used by a localized candidate E-PDCCH formed by the eCCE. For aggregation level L, for example, L=2, 4, or 8, the UE may determine a localized candidate E-PDCCH to use a DMRS port corresponding to an eCCE, for example the eCCE with the smallest index, occupied by the localized candidate E-PDCCH.

In this solution, a mapping relationship between each eCCE and a DMRS port may be instructed by a base station to a UE by using signaling or the UE may determine the mapping relationship according to some parameters such as a cell identifier, a UE identifier, and an aggregation level. The mapping relationship may be specific to a cell, for example, broadcast signaling, that is, all UEs in the cell work according to the same mapping relationship; and the mapping relationship may also be specific to a UE, for example, RRC signaling, that is, different UEs may be provided with different mapping relationships.

Solution 4: According to a mapping relationship between an eCCE of an RB pair and a DMRS port, the DMRS port used by a localized candidate E-PDCCH at each aggregation level in the RB pair is determined.

For example, if the number of available DMRS ports is recorded as P, each eCCE of an RB pair may be defined to circularly use a reference signal of the P DMRS ports in sequence. In LTE release 11, P may be equal to 4, that is, DMRS ports 7 to 10 may be used for reference signals of E-PDCCHs. For example, for a UE, a DMRS port corresponding to the i^{th} eCCE within an RB pair is 7+(*i*+*σ*)mod *P*. *σ* is an offset value associated with a UE identifier and an RB pair index.

For aggregation level 1, a UE may directly acquire, according to a DMRS port to which an eCCE is mapped, a reference signal used by a localized candidate E-PDCCH formed by the eCCE. For aggregation level L, for example, L is equal to 2, 4, or 8, the UE may determine a localized candidate E-PDCCH to use a DMRS port corresponding to an eCCE, for example the eCCE with the smallest index, occupied by the localized candidate E-PDCCH.

A mapping relationship between an eCCE and a reference signal DMRS port may be instructed by a base station through signaling or a UE may determine the mapping relationship according to some parameters such as a cell identifier and a UE identifier instead of being instructed by a signal. The mapping relationship in different RB pairs may be the same or different mapping relationships may be respectively defined for each RB pair. For each RB pair, the mapping relationship may be specific to a cell, for example, broadcast signaling, that is, all UEs in the cell work according to the same mapping relationship; and the mapping relationship may also be specific to a UE, for example, RRC signaling, that is, different UEs may be provided with different mapping relationships.

Solution 5: Each RB pair corresponds to a reference DMRS port. For an aggregation level, each candidate E-PDCCH within an RB pair in a search space corresponding to a UE respectively uses a different DMRS port which is determined according to the reference DMRS port.

For example, if the number of available DMRS ports is recorded as P, each RB pair allocated for an E-PDCCH may use different reference DMRS ports. For example, the reference DMRS ports of each RB pair are defined to circularly use reference signals of the P DMRS ports in sequence. For example, in LTE release 11, P may be equal to 4, that is, DMRS ports 7 to 10 may be used for reference signals of E-PDCCHs. A reference DMRS port of an RB pair may be determined as *p*=7+(*i*+*σ*)mod *P*, i is an index of an RB pair allocated for the E-PDCCH, and *σ* is a specific offset value of a UE; or reference DMRS ports of all RB pairs allocated for the E-PDCCH may be defined to be the same, that is, the reference DMRS port is *p*=*σ*, and *σ* is a specific offset value of a UE. For localized candidate E-PDCCHs at an aggregation level, if only a localized candidate E-PDCCH in a search space corresponding to a UE is mapped into an RB pair, the channel estimation is performed based on a reference signal of reference DMRS port *p*. For E-PDCCHs at an aggregation level, if multiple localized candidate E-PDCCHs in a search space corresponding to a UE are mapped into an RB pair, the number of the localized candidate E-PDCCHs is recorded as C. The channel estimation is performed for the C localized candidate E-PDCCHs respectively by using different DMRS ports determined according to reference DMRS port *p*. For example, according to a sequence of eCCEs with the smallest indexes occupied by the C localized candidate E-PDCCH within the RB pair, or according to a sequence of localized candidate E-PDCCHs mapped into the RB pair when a search space corresponding to a UE is determined, the i^{th} localized candidate E-PDCCH may use DMRS port 7+(*p*-7+*i*)mod *P* within the RB pair, where *i*=0,...,*C*-1.

In this solution, reference DMRS port *p* may be instructed by signaling or may be determined in an implicit method, that is, reference DMRS port *p* is determined according to some parameters such as a cell identifier and a UE identifier instead of being instructed by a signal. Reference DMRS port *p* in different RB pairs may be the same or different reference DMRS ports *p* may be respectively defined for each RB pair. For an RB pair, the reference DMRS port *p* may be specific to a cell, for example, broadcast signaling, that is, all UEs in the cell work according to the same reference DMRS port *p*; and the reference DMRS port *p* may also be specific to a UE, for example, RRC signaling, that is, different UEs may be provided with different reference DMRS ports *p*.

In this solution, when each of different aggregation levels has a localized candidate E-PDCCH mapped to the same RB pair, a DMRS port used by the localized candidate E-PDCCHs may be ensured consistent. Therefore, the UE may perform channel estimation only once to demodulate eCCEs of the E-PDCCHs at multiple aggregation levels. Alternatively, when a localized candidate E-PDCCH is mapped to multiple adjacent RB pairs, if joint channel estimation is enabled for different RB pairs to enhance channel estimation performance, it may be determined that for this type of localized candidate E-PDCCH that is mapped to multiple adjacent RB pair, the UE may use a DMRS port to be used according to a reference DMRS port in an RB pair among multiple RB pairs in a unified manner, for example, a DMRS port to be used is determined according to an RB pair with the smallest index, thereby simplifying complexity of joint channel estimation performed by the UE on each RB pair.

Solution 6: Each group of RB pairs corresponds to a reference DMRS port. For an aggregation level, each candidate E-PDCCH within a group of RB pairs in a search space corresponding to a UE respectively uses a different DMRS port which is determined according to the reference DMRS port.

In this solution, the group of RB pairs may refer to a subband, an RBG, or a group of RB pairs that supports joint channel estimation reported in CSI. Reference DMRS port *p* may be instructed by signaling or may be determined in an implicit method, that is, reference DMRS port *p* is determined according to some parameters such as a cell identifier and a UE identifier instead of being instructed by a signal. Reference DMRS port *p* in different groups of RB pairs may be the same or different reference DMRS ports *p* may be respectively defined for each group of RB pairs. For a group of RB pairs, the reference DMRS port *p* may be specific to a cell, for example, broadcast signaling, that is, all UEs in the cell work according to the same reference DMRS port *p*; and the reference DMRS port *p* may also be specific to a UE, for example, RRC signaling, that is, different UEs may be provided with different reference DMRS ports *p*.

For example, if the number of available DMRS ports is recorded as P, each group of RB pairs allocated for an E-PDCCH may use different reference DMRS ports. For example, in LTE release 11, P may be equal to 4, that is, DMRS ports 7 to 10 may be used for reference signals of E-PDCCHs. A reference DMRS port of a group of RB pairs may be defined as *p* = 7+(*i*+*σ*)mod *P*, i is an index of an RB pair group allocated for the E-PDCCH, and *σ* is a specific offset value of a UE; or reference DMRS ports of all groups of RB pairs are the same, that is, the reference DMRS port is *p*=*σ*, and *σ* is a specific offset value of a UE. For E-PDCCHs at an aggregation level, if only a localized candidate E-PDCCH is mapped into a group of RB pairs, channel estimation is performed based on reference DMRS port *p*. For E-PDCCHs at an aggregation level, if multiple localized candidate E-PDCCHs in a search space corresponding to a UE are mapped into the group of RB pairs, the number of the localized candidate E-PDCCHs is recorded as C. Channel estimation is performed for the C localized candidate E-PDCCHs respectively by using different DMRS ports determined according to reference DMRS ports. For example, according to a sequence of eCCEs with the smallest indexes occupied by the C localized candidate E-PDCCH within the group of RB pairs, or according to a sequence of localized candidate E-PDCCHs mapped into the same RB pair when a search space corresponding to a UE is determined, the i^{th} localized candidate E-PDCCH may use DMRS port 7+(*p*-7+*i*)mod *P* within the RB pair, where *i* = 0,...,*C*-1.

By using this solution, when localized candidate E-PDCCHs at different aggregation levels are mapped into the same group of RB pairs, a DMRS port used by the localized candidate E-PDCCHs may be ensured consistent. Therefore, the UE may perform channel estimation only once to demodulate eCCEs of the E-PDCCHs at multiple aggregation levels.

The foregoing describes that E-PDCCH transmission includes two parts: one part is a reference signal, and the other part is a data symbol. The foregoing embodiments describe how to determine a reference signal, and the following describes how to determine a search space related to the data symbol part.

In a process for determining a search space for a localized E-PDCCH, a base station may select, based on channel quality reported by a UE, an optimal RB pair to send a localized E-PDCCH. The optimal RB pair indicates an RB pair with the best channel quality. Selecting the optimal RB pair to send the localized E-PDCCH can improve reliability of the localized E-PDCCH as far as possible; or, in a certain eCCE division condition, any RB pair may be possible to meet a reliability requirement of the E-PDCCH, so that the localized E-PDCCH may not need to be mapped to the RB pair with the best channel quality and the RB pair with the best channel quality is used to improve performance of a PDSCH. For an aggregation level, a UE needs to perform a blind detection on multiple different candidate E-PDCCHs. These candidate E-PDCCHs form a search space corresponding to the UE.

The following describes a process for a base station to determine an RB pair to which each localized candidate E-PDCCH in a search space is mapped according to the embodiments of the present invention.

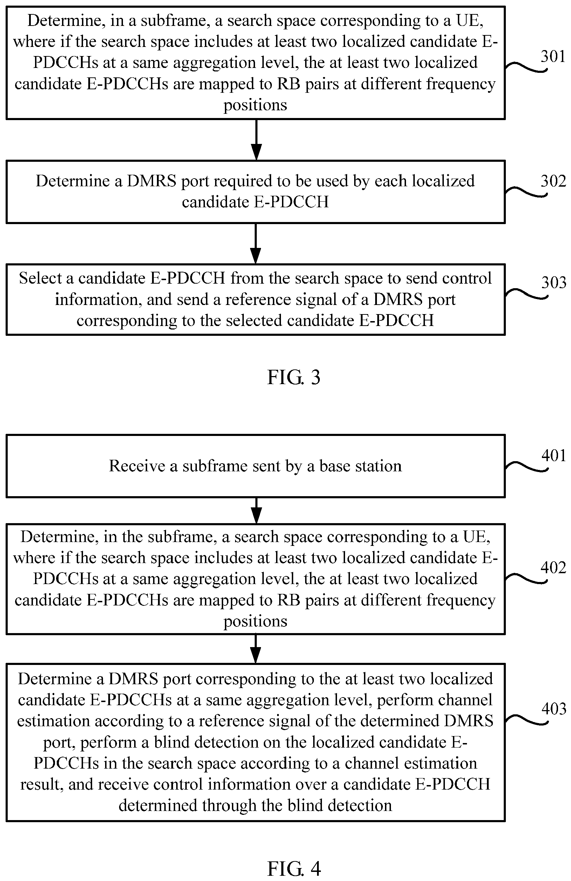

FIG. 3 is a flowchart of Embodiment 2 of a method for sending control information according to the present invention. As shown in FIG. 3, the method in this embodiment may include:
Step 301: Determine, in a subframe, a search space corresponding to a UE, where if the search space includes at least two localized candidate E-PDCCHs at a same aggregation level, the at least two localized candidate E-PDCCHs are mapped to RB pairs at different frequency positions.
Step 302: Determine a DMRS port required to be used by each localized candidate E-PDCCH.
Step 303: Select a candidate E-PDCCH from the search space to send control information, and send a reference signal of a DMRS port corresponding to the selected candidate E-PDCCH.

It should be noted that an execution body of steps 301 to 303 is a base station.

Specifically, because channel conditions for RB pairs at different frequency positions are different. The larger the frequency spacing is, the stronger the independency between subcarriers is, which is easier to ensure that at least one localized candidate E-PDCCH among multiple localized candidate E-PDCCHs can satisfy a link performance requirement, thereby achieving a gain of frequency selective scheduling. Therefore, in this embodiment, a base station can flexibly select the most proper RB pair position to send each localized candidate E-PDCCH. These localized candidate E-PDCCHs may be respectively mapped to RB pairs at different frequency positions, and a frequency spacing between RB pairs that are mapped to each localized candidate E-PDCCH is as large as possible.

A specific process is: a base station determines, in a subframe, a search space corresponding to a UE first. The search space is used by the UE to perform a blind detection on a localized candidate E-PDCCH. When the search space includes at least two localized candidate E-PDCCHs at a same aggregation level, the at least two localized candidate E-PDCCHs are mapped to RB pairs at different frequency positions. Then, the base station may determine a DMRS port required to be used by each localized candidate E-PDCCH, and then the base station selects a candidate E-PDCCH to send control information and send a reference signal corresponding to the DMRS port. Therefore, the UE may receive, through blind detection on the search space of the UE, the control information over the candidate E-PDCCH selected by the base station.

It should be noted that, a definition of the search space is specific to the UE, that is, search spaces corresponding to different UEs may not be overlapped or not completely overlapped, thereby reducing a congestion problem of E-PDCCHs between UEs. In addition, for the same UE, E-PDCCHs at different aggregation levels may be mapped to different RB pair positions, thereby further easing the congestion problem of E-PDCCHs between UEs.

In addition, it should be noted that, the specific implementation process of step 302 may be preferably implemented by using Embodiment 1 of the foregoing method for sending control information and the specific six solutions, which is not further described herein.

The following provides multiple specific implementation solutions to describe in detail step 301 in the method according to the embodiment as shown in FIG. 3.

Solution 1: A search space includes at least two groups of RB pairs, at least two localized candidate E-PDCCHs at an aggregation level are mapped to the at least two groups of RB pairs, and a maximum difference value of the number of localized candidate E-PDCCHs mapped to each group of RB pairs is 1, where the group of RB pairs is a subband, an RBG, or a group of RB pairs that supports joint channel estimation reported in CSI.

Channel quality reported by a UE to a base station may use a subband (subband) as a granularity, and each subband includes multiple successive RB pairs. For an aggregation level, localized candidate E-PDCCHs thereof are mapped to subbands in a dispersed manner as much as possible, and the numbers of localized candidate E-PDCCHs mapped to each subband are the same as far as possible. Alternatively, resource allocation of the base station may use an RBG as a granularity. An RBG includes multiple RB pairs, and a width of a subband is an integral multiple of an RBG. Therefore, the foregoing method for mapping localized candidate E-PDCCH based on subband may be: for an aggregation level, the localized candidate E-PDCCHs thereof are mapped to as much RBGs as possible in a dispersed manner, and the numbers of localized candidate E-PDCCHs mapped to each subband are the same as far as possible.

Specifically, RB pairs used for the E-PDCCHs may be divided into multiple groups. A group of RB pairs herein may refer to a subband, an RBG, or a group of RB pairs that supports joint channel estimation reported in CSI. Specifically, the group of RB pairs may be a group of one RB pair. If the number of groups of RB pairs used for E-PDCCHs and configured by a high layer is recorded as S, and for an aggregation level, the number of localized candidate E-PDCCHs that require blind detection is M, when M<=S, the localized candidate E-PDCCHs may be respectively mapped to M groups of RB pairs; and when M>S, the number of localized candidate E-PDCCHs included in each group of RB pairs is the same or differs by 1 at most, that is, the number of localized candidate E-PDCCHs mapped to each group of RB pairs is └*M*/*S*┘ or ┌*M*/*S*┐. Groups of RB pairs to which localized candidate E-PDCCHs of different UEs are mapped may be different. Further, specific time-frequency positions, to which localized candidate E-PDCCHs of different UEs are mapped, within a group of RB pairs may also be different. For example, for an aggregation level, a UE needs to perform a blind detection on six localized candidate E-PDCCHs. If resources used for transmitting an E-PDCCH of the UE include six groups of RB pairs, optimally, for the aggregation level, each group of RB pairs may be mapped to a localized candidate E-PDCCH.

M candidate E-PDCCHs of a search space of a UE may be mapped to successive groups of RB pairs. For example, the i^{th} localized candidate E-PDCCH may be mapped to a group of RB pairs with index j being *j* = (*i*+*σ*)mod *S*. *σ* is an offset value associated with a UE identifier and an aggregation level to ensure that mapping positions of search spaces of different UEs or at different aggregation levels may be different. Alternatively, because the larger the frequency distance is, the smaller the correlation between groups of RB pairs is, a frequency distance between groups of RB pairs to which localized candidate E-PDCCHs are mapped may be maximized as much as possible, thereby improving performance of frequency selective scheduling. When M is smaller than or equal to S, the search space of the UE is mapped to M groups of non-successive RB pairs; and when M is greater than S, each group of RB pairs is mapped to ┌*M*/*S*┐ or └*M*/*S*┘ localized candidate E-PDCCHs, where the group of RB pairs that is mapped to ┌*M*/*S*┐ localized candidate E-PDCCHs is a group of non-successive RBs. For example, the i^{th} localized candidate E-PDCCH may be mapped to a group of RB pairs with index j being *j* = (*i*+*σ*)mod *S*. *σ* is an offset value associated with a UE identifier and an aggregation level to ensure that mapping positions of search spaces of different UEs or at different aggregation levels may be different.

The foregoing process only determines a group of RB pairs to which a localized candidate E-PDCCH is mapped. Which specific localized candidate E-PDCCH within the group of RB pairs to which the localized candidate E-PDCCH is mapped may be further determined. For example, assuming that a group of RB pairs may be divided into K localized candidate E-PDCCHs for an aggregation level, and assuming that C localized candidate E-PDCCHs need to be mapped into this group of RB pairs in a search space corresponding to a UE. An index of a localized candidate E-PDCCH, occupied by the search space corresponding to the UE, within this group of RB pairs may be defined as *l* = (*i*+*υ*)mod *K*, where *i* = 0,...,*C-*1. *ν* is an offset value associated with a UE identifier and an aggregation level.

Solution 2: A search space includes M successive localized candidate E-PDCCHs at aggregation level L, and each localized candidate E-PDCCH is respectively mapped to L successive eCCEs.

The foregoing method for mapping localized candidate E-PDCCHs based on RB pair group (subband, RBG, or the like) assumes that an integral number of localized candidate E-PDCCHs within a group of RB pairs may be determined. The foregoing description includes a situation in which eCCEs within a group of RBs is exactly equally divided into an integral number of candidate E-PDCCHs, and also includes a situation in which eCCEs within a group of RB pairs cannot be equally divided. For example, if the number of eCCEs within a group of RB pairs is recorded as K. When aggregation level L cannot be exactly divided by K, └*K*/*L*┘ candidate E-PDCCHs at aggregation level L are divided in the group of RB pairs. A mapping position of a localized candidate E-PDCCH at each aggregation level may be determined in an eCCE granularity or on an RB pair resource used for E-PDCCH transmission configured by a base station.

Specifically, each RB pair may be divided into multiple eCCEs. If the number of RB pairs within a group of RB pairs is recorded as *N_{PRB}* and the number of eCCEs in each RB pair is recorded as K, the total number of eCCEs is *N_{CCE}*=*K*·*N_{PRB}.* Each localized candidate E-PDCCH may include one or more eCCEs. In this way, a search space of a localized candidate E-PDCCH at each aggregation level is defined on the *K*·*N_{PRB}* eCCEs. In this case, that a localized candidate E-PDCCH is completely limited within a group of RB pairs may still be ensured, or that a localized candidate E-PDCCH crosses multiple groups of RB pairs may also be permitted.

The following introduces multiple eCCE numbering manners for an RB pair first. Based on this numbering manner, a search space of successive eCCEs to which a localized candidate E-PDCCH is mapped may be determined.

Manner 1: Assuming that reference signals of a localized E-PDCCH are completely independent within different RB pairs, that is, joint channel estimation between adjacent RB pairs is not supported, in this solution, the following method may be used to sequence eCCEs: eCCEs within an RB pair are numbered first, and then eCCEs within a next RB pair are numbered. That is, eCCE with index i corresponds to the (*i* mod *K*)^{th} eCCE within the (└*i*/*k*┘)^{th} RB pairs used for the E-PDCCH.

Manner 2: Assuming that joint channel estimation of multiple RB pairs may be used to improve channel estimation performance, a group of adjacent RB pairs may be used as a unit when eCCEs are sequenced. For a group of RB pairs, an eCCE of each RB pair is numbered first, and then a next eCCE of each RB pair is numbered; then, an eCCE of a next group of RB pairs is numbered. A group of RB pairs herein may refer to a subband, an RBG, or a group of RB pairs that supports joint channel estimation reported in CSI. If each group of RB pairs is recorded to include A RB pairs, eCCE with index i is mapped to the (└(*i* mod(A·*k*))/*A*┘)^{th} eCCE within the ((*i* mod(*A*·*K*))mod *A*)^{th} RB pairs in the (└*i*/(*A*·*K*)┘)^{th} group of RB pairs.

When this eCCE numbering manner is used, assuming that localized candidate E-PDCCHs that contain multiple eCCEs are composed of successive eCCEs, these localized candidate E-PDCCHs are mapped to multiple RB pairs within a group of RB pairs, and joint channel estimation for reference signals in multiple RB pairs may be used to improve channel estimation precision, thereby improving link performance of the E-PDCCHs.

Alternatively, if an allocation method of using a group of RB pairs as a granularity is used when RB pairs are allocated for an E-PDCCH, the foregoing second eCCE numbering method may be used. If an allocation method of using an RB pair as a granularity is used, the foregoing first eCCE numbering method is used.

For a distributed E-PDCCH, this embodiment may also provide an eCCE numbering manner: Assuming that N RB pairs are configured by a high layer to transmit the distributed E-PDCCH, eCCEs may be divided within the N RB pairs and numbered; or assuming that *N*=*A*·*B*, that is, N RB pairs may be divided into A groups and each group includes B RB pairs, then eCCEs are divided within B RB pairs in each group and the A groups of eCCEs are sorted together in sequence.

Based on the foregoing eCCE numbering, a search space corresponding to a UE may be determined. Herein positions of candidate E-PDCCHs mapped in the search space corresponding to the UE may be different. For an aggregation level L, each localized candidate E-PDCCH may occupy L successive eCCEs. If the number of candidate E-PDCCHs is recorded as M, a search space is defined on M successive candidate E-PDCCHs at aggregation level L. For example, if a tree structure is considered, the m^{th} candidate E-PDCCH

is mapped to eCCE index *L*{(*m*+*σ*)mod└*N*_{CCE}/*L*┘}+*i*, where *i*=0,...,*M*-1; or the m^{th} localized candidate E-PDCCH is mapped to eCCE index ((*m*+*σ*)·*L*+*i*)mod *N*_{CCE}, where *i* = 0,...,*M*-1. *σ* is an offset value associated with a UE identifier and an aggregation level. Therefore, mapping positions of search spaces of different UEs or at different aggregation levels are different.

Solution 3: A search space includes M non-successive localized candidate E-PDCCHs at aggregation level L, and each localized candidate E-PDCCH is respectively mapped to L successive eCCEs.

In this solution, for an eCCE numbering manner, the foregoing two manners may still be used. Different from solution 2, the M localized candidate E-PDCCHs in the search space may be non-successive. Herein an interval between eCCEs of different localized candidate E-PDCCH may be as large as possible, so that a frequency distance between localized candidate E-PDCCHs is as large as possible and the relevance is weak, thereby maximizing a benefit of frequency selective scheduling.

For example, the m^{th} localized candidate E-PDCCH is mapped to eCCE index *L*{(└*m*·└*N*_{CCE}/*L*┘/*M*┘+*σ*)mod└*N*_{CCE}/L┘}+*i*, where *i* = 0,...,*M*-1; or the m^{th} localized candidate E-PDCCH is mapped to eCCE index {*L*(└*m*·max(└*N*_{CCE}/*L*┘/*M*,1)┘+*σ*)+*i*}mod *N*_{CCE}, where *i* = 0,...,*M*-1. *σ* is an offset value associated with a UE identifier and an aggregation level. Therefore, mapping positions of search spaces of different UEs or at different aggregation levels are different.

The foregoing content describes the implementation process of Embodiment 2 of a method for sending control information according to the present invention, and the specific implementation is on a base station side. Correspondingly, the following describes a corresponding implementation solution on a UE side.

FIG. 4 is a flowchart of Embodiment 2 of a method for receiving control information according to the present invention. As shown in FIG. 4, the method in this embodiment may include:
Step 401: Receive a subframe sent by a base station.
Step 402: Determine, in the subframe, a search space corresponding to a UE, where if the search space includes at least two localized candidate E-PDCCHs at a same aggregation level, the at least two localized candidate E-PDCCHs are mapped to RB pairs at different frequency positions.
Step 403: Determine a DMRS port corresponding to the at least two localized candidate E-PDCCHs at a same aggregation level, perform channel estimation according to a reference signal of the determined DMRS port, perform a blind detection on the localized candidate E-PDCCHs in the search space according to a channel estimation result, and receive control information over a candidate E-PDCCH determined through the blind detection.

It should be noted that an execution body of steps 401 to 403 is a user equipment.

Specifically, because channel conditions for RB pairs at different frequency positions are different. The larger the frequency spacing is, the stronger the independency between subcarriers is, which is easier to ensure that at least one localized candidate E-PDCCH among multiple localized candidate E-PDCCHs can satisfy a link performance requirement, thereby achieving a gain of frequency selective scheduling. Therefore, in this embodiment, to obtain a gain of a frequency diversity, a base station can flexibly select the most proper RB pair position to send each localized candidate E-PDCCH. These localized candidate E-PDCCHs may be respectively mapped to RB pairs at different frequency positions, and a frequency spacing between RB pairs that are mapped to each localized candidate E-PDCCH is as large as possible. Correspondingly, the UE detects the E-PDCCHs at these frequency positions.

Therefore, the UE can determine a search space for performing a blind detection on a localized candidate E-PDCCH first. When the determined search space may include at least two localized candidate E-PDCCHs at a same aggregation level, the at least two localized candidate E-PDCCHs are mapped to RB pairs at different frequency positions. Then, the UE can determine a reference signal of a DMRS port required to be used by each localized candidate E-PDCCH. Then, the UE performs channel estimation according to a reference signal of each DMRS port, performs a blind detection on the corresponding localized candidate E-PDCCH according to a channel estimation result, and receives control information over a candidate E-PDCCH determined through the blind detection.

It should be noted that, a definition of the search space is specific to the UE, that is, search spaces corresponding to different UEs may not be overlapped or not completely overlapped, thereby reducing a congestion problem of E-PDCCHs between UEs. In addition, for the same UE, E-PDCCHs at different aggregation levels may be mapped to different RB pair positions, thereby further easing the congestion problem of E-PDCCHs between UEs.

Before implementing step 402, the UE may learn a definition of the search space on a base station in advance, and therefore performs a blind detection on the localized candidate E-PDCCH in the search space consistent with that defined on the base station. Specifically, the base station may determine a search space by using the foregoing solution 1, solution 2, and solution 3. Correspondingly, the UE may perform a blind detection on a localized candidate E-PDCCH according to the corresponding search space. Specifically, the search space in which the UE performs a blind detection has the following specific implementation manners:
Solution 1: A search space includes at least two groups of RB pairs, at least two localized candidate E-PDCCHs at an aggregation level are mapped to the at least two groups of RB pairs, and a maximum difference value of the number of localized candidate E-PDCCHs are mapped to each group of RB pairs is 1, where the group of RB pairs is a subband, an RBG, or a group of RB pairs that supports joint channel estimation reported in CSI.

Channel quality reported by a UE to a base station may use a subband as a granularity, and each subband includes multiple successive RB pairs. For an aggregation level, localized candidate E-PDCCHs thereof are mapped to subbands in a dispersed manner as much as possible, and the numbers of localized candidate E-PDCCHs mapped to each subband are the same as far as possible. Alternatively, resource allocation of the base station may use an RBG as a granularity. An RBG includes multiple RB pairs, and a width of a subband is an integral multiple of an RBG. Therefore, in the search space, for an aggregation level, the localized candidate E-PDCCHs thereof are mapped to as much RBGs as possible in a dispersed manner, and the numbers of localized candidate E-PDCCHs mapped to each RBG are the same as far as possible.

Specifically, RB pairs used for the E-PDCCHs may be divided into multiple groups. A group of RB pairs herein may refer to a subband, an RBG, or a group of RB pairs that supports joint channel estimation reported in CSI. Specifically, the group of RB pairs may be a group of one RB pair. If the number of groups of RB pairs used for E-PDCCHs and configured by a high layer is recorded as S, and for an aggregation level, the number of localized candidate E-PDCCHs that require blind detection is M, when M<=S, the localized candidate E-PDCCHs may be respectively mapped to M groups of RB pairs; and when M>S, the number of localized candidate E-PDCCHs included in each group of RB pairs is the same or differs by 1 at most, that is, the number of localized candidate E-PDCCHs mapped to each group of RB pairs is └*M*/*S*┘ or ┌*M*/*S*┐. Groups of RB pairs to which localized candidate E-PDCCHs of different UEs are mapped may be different. Further, specific time-frequency positions within a group of RB pairs to which localized candidate E-PDCCHs of different UEs are mapped may also be different. For example, for an aggregation level, a UE needs to perform a blind detection on six localized candidate E-PDCCHs. If resources used for transmitting an E-PDCCH of the UE include six groups of RB pairs, optimally, for the aggregation level, each group of RB pairs may be mapped to a localized candidate E-PDCCH.

M candidate E-PDCCHs of a search space of a UE may be mapped to successive groups of RB pairs. For example, the i^{th} localized candidate E-PDCCH may be mapped to a group of RB pairs with index j being *j* = (*i*+*σ*)mod *S*. *σ* is an offset value associated with a UE identifier and an aggregation level to ensure that mapping positions of search spaces of different UEs or at different aggregation levels may be different. Alternatively, because the larger the frequency distance is, the smaller the correlation between groups of RB pairs is, a frequency distance between groups of RB pairs to which localized candidate E-PDCCHs are mapped may be maximized as much as possible, thereby improving performance of frequency selective scheduling. When M is smaller than or equal to S, the search space of the UE is mapped to M groups of non-successive RB pairs; and when M is greater than S, each group of RB pairs is mapped to ┌*M*/*S*┐ or └*M*/*S*┘ localized candidate E-PDCCHs, where the group of RB pairs that is mapped to ┌*M*/*S*┐ localized candidate E-PDCCHs is a group of non-successive RBs. For example, the i^{th} localized candidate E-PDCCH may be mapped to a group of RB pairs with index j being *j* = └(*i*+*σ*)·*S*/*M*┘mod *S*. *σ* is an offset value associated with a UE identifier and an aggregation level to ensure that mapping positions of search spaces of different UEs or at different aggregation levels may be different.

The foregoing process only determines a group of RB pairs to which a localized candidate E-PDCCH is mapped. Which specific localized candidate E-PDCCH within the group of RB pairs to which the localized candidate E-PDCCH is mapped may be further determined. For example, assuming that a group of RB pairs may be divided into K localized candidate E-PDCCHs for an aggregation level, and assuming that C localized candidate E-PDCCHs in a search space corresponding to a UE needs to be mapped into this group of RB pairs. An index of a localized candidate E-PDCCH within this group of RB pairs to which the search space corresponding to the UE is mapped to may be defined as *l* = (*i*+*ν*)mod *K*,where *i* = 0,...,*C*-1.*ν* is an offset value associated with a UE identifier and an aggregation level.

Solution 2: A search space includes M successive localized candidate E-PDCCHs at aggregation level L, and each localized candidate E-PDCCH is respectively mapped to L successive eCCEs.

The foregoing method for mapping localized candidate E-PDCCHs based on RB pair group (subband, RBG, or the like) assumes that an integral number of localized candidate E-PDCCHs within a group of RB pairs may be determined. The foregoing description includes a situation in which eCCEs within a group of RBs is exactly equally divided into an integral number of candidate E-PDCCHs, and also includes a situation in which eCCEs within a group of RB pairs cannot be equally divided. For example, if the number of eCCEs within a group of RB pairs is recorded as K. When aggregation level L cannot be exactly divided by K, └*K*/*L*┘ candidate E-PDCCHs at aggregation level L are divided in the group of RB pairs. A UE may determine, in an eCCE granularity or on an RB pair resource used for E-PDCCH transmission configured on a base station, a mapping position of a localized candidate E-PDCCH at each aggregation level.

Specifically, each RB pair may be divided into multiple eCCEs. If the number of RB pairs within a group of RB pairs is recorded as *N_{PRB}* and the number of eCCEs in each RB pair is recorded as K, the total number of eCCEs is *N_{CCE}* = *K*·*N_{PRB}*. Each localized candidate E-PDCCH may include one or more eCCEs. In this way, a search space of a localized candidate E-PDCCH at each aggregation level is defined on the *K*·*N_{PRB}* eCCEs. In this case, that a localized candidate E-PDCCH is completely limited within a group of RB pairs may still be ensured, or that a localized candidate E-PDCCH crosses multiple groups of RB pairs may also be permitted.

The following introduces multiple eCCE numbering manners for an RB pair first. Based on this numbering manner, the UE may determine a search space of successive eCCEs to which a localized candidate E-PDCCH is mapped.

Manner 1: Assuming that reference signals of a localized E-PDCCH are completely independent within different RB pairs, that is, joint channel estimation between adjacent RB pairs is not supported, in this solution, the following method may be used to sequence eCCEs: eCCEs within an RB pair are numbered first, and then eCCEs within a next RB pair are numbered. That is, eCCE with index i corresponds to the (*i* mod *K*)^{th} eCCE within the (└*i*/*K*┘)^{th} RB pairs used for the E-PDCCH.

Manner 2: Assuming that joint channel estimation of multiple RB pairs may be used to improve channel estimation performance, a group of adjacent RB pairs may be used as a unit when eCCEs are sequenced. For a group of RB pairs, an eCCE of each RB pair is numbered first, and then a next eCCE of each RB pair is numbered; then, an eCCE of a next group of RB pairs is numbered. A group of RB pairs herein may refer to a subband, an RBG, or a group of RB pairs that supports joint channel estimation reported in CSI. If each group of RB pairs is recorded to include A RB pairs, eCCE with index i is mapped to the (└(*i* mod(*A*·*k*))/*A*┘)^{th} eCCE within the ((*i* mod(*A*·*K*))mod *A*)^{th} RB pairs in the (└*i*/(*A*·*K*)┘)^{th} group of RB pairs.

When this eCCE numbering manner is used, assuming that localized candidate E-PDCCHs that contain multiple eCCEs are composed of successive eCCEs, these localized candidate E-PDCCHs are mapped to multiple RB pairs within a group of RB pairs, and joint channel estimation for reference signals in multiple RB pairs may be used to improve channel estimation precision, thereby improving link performance of the E-PDCCHs.

Alternatively, if an allocation method of using a group of RB pairs as a granularity is used when RB pairs are allocated for an E-PDCCH, the foregoing second eCCE numbering method may be used. If an allocation method of using an RB pair as a granularity is used, the foregoing first eCCE numbering method is used.

For a distributed E-PDCCH, this embodiment may also provide an eCCE numbering manner: Assuming that N RB pairs are configured by a high layer to transmit the distributed E-PDCCH, eCCEs may be divided within the N RB pairs and numbered; or assuming that *N* = *A*·*B*, that is, N RB pairs may be divided into A groups and each group includes B RB pairs, then eCCEs are divided within B RB pairs in each group and the A groups of eCCEs are sorted together in sequence.

Based on the foregoing eCCE numbering, the UE may determine a search space. Herein positions of candidate E-PDCCHs mapped in the search space corresponding to the UE may be different. For an aggregation level L, each localized candidate E-PDCCH may occupy L successive eCCEs. If the number of candidate E-PDCCHs is recorded as M, a search space is defined on M successive candidate E-PDCCHs at aggregation level L. For example, if a tree structure is considered, the m^{th} candidate E-PDCCH is mapped to eCCE index L{(*m*+*σ*)mod└*N*_{CCE}/*L*┘}+*i*, where *i* = 0,...,*M*-1; or the m^{th} localized candidate E-PDCCH is mapped to eCCE index ((*m*+*σ*)·*L*+*i*)mod *N*_{CCE}, where *i* = 0,...,*M*-1. *σ* is an offset value associated with a UE identifier and an aggregation level. Therefore, mapping positions of search spaces of different UEs or at different aggregation levels are different.

Solution 3: A search space includes M non-successive localized candidate E-PDCCHs at aggregation level L, and each localized candidate E-PDCCH is respectively mapped to L successive eCCEs.

In this solution, for an eCCE numbering manner, the foregoing two manners may still be used. Different from solution 2, the M localized candidate E-PDCCHs in the search space may be non-successive. Herein an interval between eCCEs of different localized candidate E-PDCCH may be as large as possible, so that a frequency distance between localized candidate E-PDCCHs is as large as possible and the relevance is weak, thereby maximizing a benefit of frequency selective scheduling.

For example, the m^{th} localized candidate E-PDCCH is mapped to eCCE index *L*{(└*m·*└*N*_{CC*E*}/*L*┘/*M*┘+*σ*)mod└*N*_{CCE}/*L*┘}+*i*, where *i* = 0,...,*M*-1;or the m^{th} localized candidate E-PDCCH is mapped to eCCE index {L(└*m*.max(└*N*_{CCE}/*L*┘/*M*,1)┘+*σ*)+*i*}mod *N*_{CCE}, where *i* = 0,...,*M*-1. *σ* is an offset value associated with a UE identifier and an aggregation level. Therefore, mapping positions of search spaces of different UEs or at different aggregation levels are different.

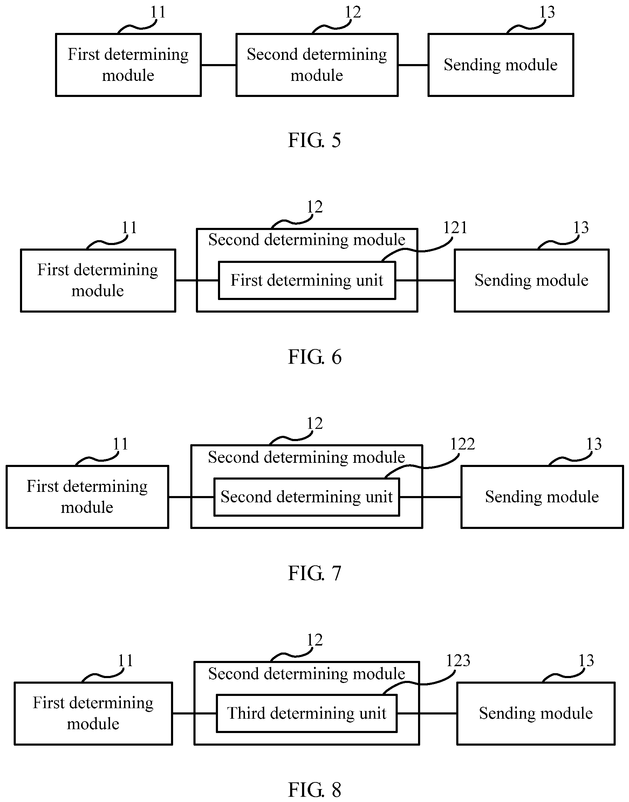

FIG. 5 is a schematic structural diagram of Embodiment 1 of a base station according to the present invention. As shown in FIG. 5, the base station in this embodiment may include a first determining module 11, a second determining module 12, and a sending module 13; where the first determining module 11 is configured to determine, in a subframe, a search space corresponding to a user equipment UE, where one or more localized candidate E-PDCCHs at an aggregation level in the search space are mapped into a same resource block RB pair or a same group of RB pairs; the second determining module 12 is configured to determine a demodulation reference signal DMRS port required to be used by the one or more localized candidate E-PDCCHs, where different DMRS ports correspond to different localized candidate E-PDCCHs; and the sending module 13 is configured to select a candidate E-PDCCH from the search space to send control information, and send a reference signal of a DMRS port corresponding to the selected candidate E-PDCCH.

The base station in this embodiment may be used to implement the technical solution according to the embodiment of the method shown in FIG. 1. The implementation principle and technical effect thereof are similar, which are not repeated herein.

FIG. 6 is a schematic structural diagram of Embodiment 2 of a base station according to the present invention. As shown in FIG. 6, the base station in this embodiment is based on the base station shown in FIG. 5, and further, the second determining module 12 may include a first determining unit 121, configured to: for all RB pair resources used for E-PDCCH transmission, respectively determine a DMRS port used by each corresponding localized candidate E-PDCCH.

The base station in this embodiment may be used to implement the technical solution in solution 1 according to the embodiment of the method shown in FIG. 1 during specific implementation. The implementation principle and technical effect thereof are similar, which are not repeated herein.

FIG. 7 is a schematic structural diagram of Embodiment 3 of a base station according to the present invention. As shown in FIG. 7, the base station in this embodiment is based on the base station shown in FIG. 5, and further, the second determining module 12 may include a second determining unit 122, configured to: for an aggregation level, respectively determine a DMRS port used by each corresponding localized candidate E-PDCCH in a search space.

The base station in this embodiment may be used to implement the technical solution in solution 2 according to the embodiment of the method shown in FIG. 1 during specific implementation. The implementation principle and technical effect thereof are similar, which are not repeated herein.

FIG. 8 is a schematic structural diagram of Embodiment 4 of a base station according to the present invention. As shown in FIG. 8, the base station in this embodiment is based on the base station shown in FIG. 5, and further, the second determining module 12 may include a third determining unit 123, configured to determine a mapping relationship between an eCCE of an RB pair resource used for the E-PDCCH and a DMRS port, and then determine the DMRS port used by a localized candidate E-PDCCH at each aggregation level.

The base station in this embodiment may be used to implement the technical solution in solution 3 according to the embodiment of the method shown in FIG. 1 during specific implementation. The implementation principle and technical effect thereof are similar, which are not repeated herein.

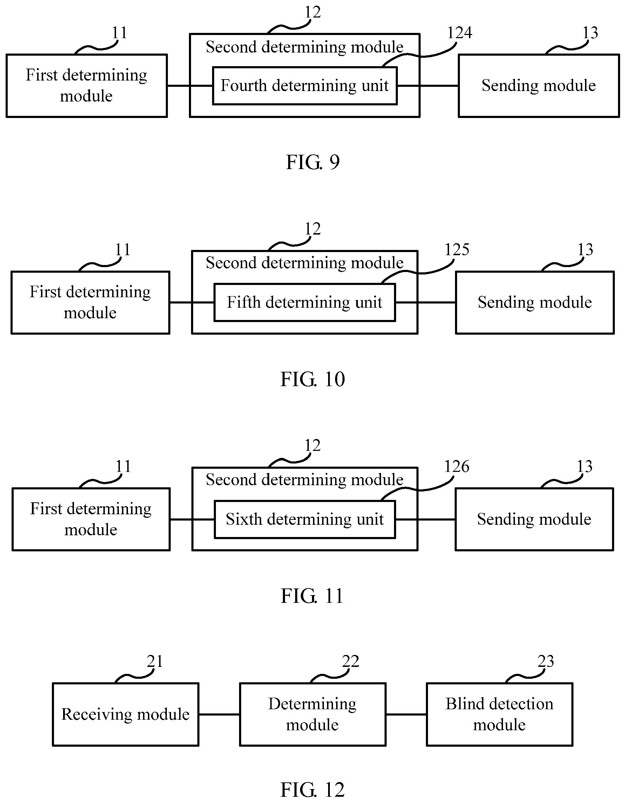

FIG. 9 is a schematic structural diagram of Embodiment 5 of a base station according to the present invention. As shown in FIG. 9, the base station in this embodiment is based on the base station shown in FIG. 5, and further, the second determining module 12 may include a fourth determining unit 124, configured to determine a mapping relationship between an eCCE of each RB pair and a DMRS port, and then determine the DMRS port used by a localized candidate E-PDCCH at each aggregation level.

The base station in this embodiment may be used to implement the technical solution in solution 4 according to the embodiment of the method shown in FIG. 1 during specific implementation. The implementation principle and technical effect thereof are similar, which are not repeated herein.

FIG. 10 is a schematic structural diagram of Embodiment 5 of a base station according to the present invention. As shown in FIG. 10, the base station in this embodiment is based on the base station shown in FIG. 5, and further, the second determining module 12 may include a fifth determining unit 125, configured to: for an aggregation level, determine that each candidate E-PDCCH within an RB pair in a search space respectively uses a different DMRS port which is determined according to the reference DMRS port and each RB pair corresponds to a reference DMRS port.

The base station in this embodiment may be used to implement the technical solution in solution 5 according to the embodiment of the method shown in FIG. 1 during specific implementation. The implementation principle and technical effect thereof are similar, which are not repeated herein.

FIG. 11 is a schematic structural diagram of Embodiment 7 of a base station according to the present invention. As shown in FIG. 11, the base station in this embodiment is based on the base station shown in FIG. 5, and further, the second determining module 12 may include a sixth determining unit 126, configured to: for an aggregation level, determine that each candidate E-PDCCH within a group of RB pairs in a search space respectively uses a different DMRS port determined according to the reference DMRS port and each group of RB pairs corresponds to a reference DMRS port.

The base station in this embodiment may be used to implement the technical solution in solution 6 according to the embodiment of the method shown in FIG. 1 during specific implementation. The implementation principle and technical effect thereof are similar, which are not repeated herein.

FIG. 12 is a schematic structural diagram of Embodiment 1 of a user equipment according to the present invention. As shown in FIG. 12, the UE in this embodiment may include: a receiving module 21, a determining module 22, and a blind detection module 23, where the receiving module 21 is configured to receive a subframe sent by a base station, and determine, in the subframe, a search space corresponding to a UE, where one or more localized candidate E-PDCCHs at an aggregation level in the search space are mapped into a same RB pair or a same group of RB pairs; the determining module 22 is configured to determine a DMRS port required to be used by the one or more localized candidate E-PDCCHs, where different DMRS ports correspond to different localized candidate E-PDCCHs; and the blind detection module 23 is configured to perform channel estimation according to a reference signal of the DMRS port determined to be used, perform a blind detection on the localized candidate E-PDCCH in the search space according to a channel estimation result, and receive control information over a candidate E-PDCCH determined through the blind detection.

The UE in this embodiment may be used to implement the technical solution according to the embodiment of the method shown in FIG. 2. The implementation principle and technical effect thereof are similar, which are not repeated herein.

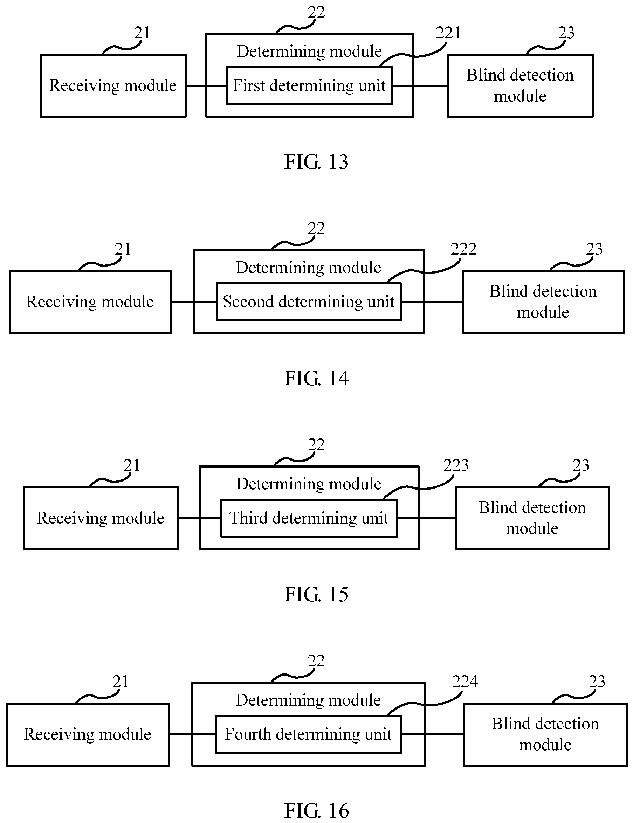

FIG. 13 is a schematic structural diagram of Embodiment 2 of a user equipment according to the present invention. As shown in FIG. 13, the UE in this embodiment is based on the UE shown in FIG. 12, and further, the determining module 22 may include: a first determining unit 221, configured to determine, according to a mapping relationship between each localized candidate E-PDCCH of all RB pair resources used for E-PDCCH transmission and a corresponding used DMRS port, the DMRS port used by a localized candidate E-PDCCH at an aggregation level in the search space.

The UE in this embodiment may be used to implement the technical solution in solution 1 according to the embodiment of the method shown in FIG. 2 during specific implementation. The implementation principle and technical effect thereof are similar, which are not repeated herein.

FIG. 14 is a schematic structural diagram of Embodiment 3 of a user equipment according to the present invention. As shown in FIG. 14, the UE in this embodiment is based on the UE shown in FIG. 12, and further, the determining module 22 may include: a second determining unit 222, configured to: according to a mapping relationship between each localized candidate E-PDCCH at an aggregation level in a search space and a corresponding used DMRS port, determine a DMRS port used by a localized candidate E-PDCCH at an aggregation level in the search space.

The UE in this embodiment may be used to implement the technical solution in solution 2 according to the embodiment of the method shown in FIG. 2 during specific implementation. The implementation principle and technical effect thereof are similar, which are not repeated herein.

FIG. 15 is a schematic structural diagram of Embodiment 4 of a user equipment according to the present invention. As shown in FIG. 15, the UE in this embodiment is based on the UE shown in FIG. 12, and further, the determining module 22 may include a third determining unit 223, configured to determine, according to a mapping relationship between an eCCE of an RB pair resource used for the E-PDCCH and a DMRS port, the DMRS port used by a localized candidate E-PDCCH at each aggregation level.

The UE in this embodiment may be used to implement the technical solution in solution 3 according to the embodiment of the method shown in FIG. 2 during specific implementation. The implementation principle and technical effect thereof are similar, which are not repeated herein.

FIG. 16 is a schematic structural diagram of Embodiment 5 of a user equipment according to the present invention. As shown in FIG. 16, the UE in this embodiment is based on the UE shown in FIG. 12, and further, the determining module 22 may include a fourth determining unit 224, configured to determine, according to a mapping relationship between an eCCE of an RB pair and a DMRS port, the DMRS port used by a localized candidate E-PDCCH at each aggregation level.

The UE in this embodiment may be used to implement the technical solution in solution 4 according to the embodiment of the method shown in FIG. 2 during specific implementation. The implementation principle and technical effect thereof are similar, which are not repeated herein.

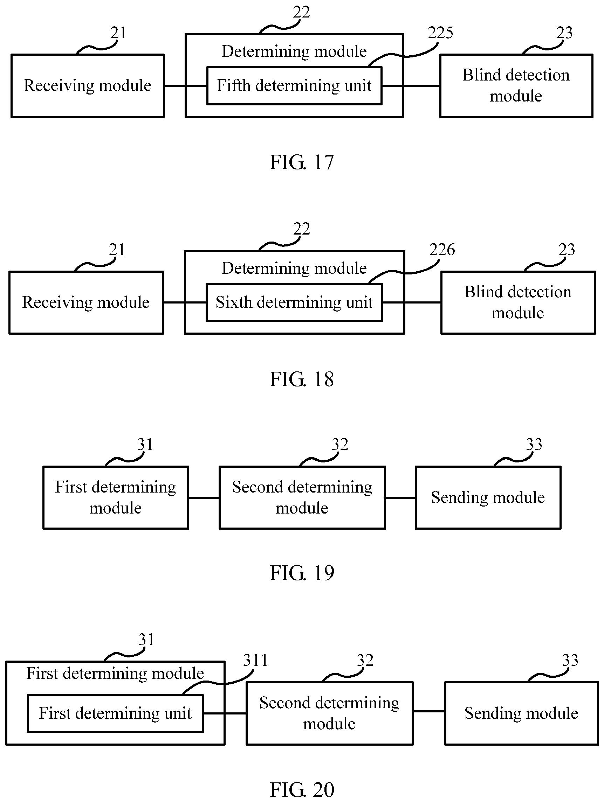

FIG. 17 is a schematic structural diagram of Embodiment 6 of a user equipment according to the present invention. As shown in FIG. 17, the UE in this embodiment is based on the UE shown in FIG. 5, and further, the determining module 22 may include a fifth determining unit 225, configured to: for an aggregation level, determine that each candidate E-PDCCH within an RB pair in the search space respectively uses a different DMRS port determined according to the reference DMRS port and each RB pair corresponds to a reference DMRS port.

The UE in this embodiment may be used to implement the technical solution in solution 5 according to the embodiment of the method shown in FIG. 2 during specific implementation. The implementation principle and technical effect thereof are similar, which are not repeated herein.

FIG. 18 is a schematic structural diagram of Embodiment 7 of a user equipment according to the present invention. As shown in FIG. 18, the UE in this embodiment is based on the UE shown in FIG. 12, and further, the determining module 22 may include a sixth determining unit 226, configured to: for an aggregation level, determine that each candidate E-PDCCH within a group of RB pairs in the search space respectively uses a different DMRS port determined according to the reference DMRS port and each group of RB pairs corresponds to a reference DMRS port.

The UE in this embodiment may be used to implement the technical solution in solution 6 according to the embodiment of the method shown in FIG. 2 during specific implementation. The implementation principle and technical effect thereof are similar, which are not repeated herein.

FIG. 19 is a schematic structural diagram of Embodiment 8 of a base station according to the present invention. As shown in FIG. 19, the base station in this embodiment may include a first determining module 31, a second determining module 32, and a sending module 33, where the first determining module 31 is configured to determine, in a subframe, a search space corresponding to a UE, where if the search space includes at least two localized candidate E-PDCCHs at a same aggregation level, the two localized candidate E-PDCCHs are mapped to RB pairs at different frequency positions; the second determining module 12 is configured to determine a DMRS port required to be used by each localized candidate E-PDCCH; and the sending module 33 is configured to select a candidate E-PDCCH from the search space to send control information, and send a reference signal of a DMRS port corresponding to the selected candidate E-PDCCH.

The base station in this embodiment may be used to implement the technical solution according to the embodiment of the method shown in FIG. 3. The implementation principle and technical effect thereof are similar, which are not repeated herein.

FIG. 20 is a schematic structural diagram of Embodiment 9 of a base station according to the present invention. As shown in FIG. 20, the base station in this embodiment is based on the base station shown in FIG. 19, and further, the first determining module 31 may include a first determining unit 311, configured to determine that at least two localized candidate E-PDCCHs at an aggregation level in the search space are mapped to at least two groups of RB pairs and a maximum difference value of the number of localized candidate E-PDCCHs mapped to each group of RB pairs is 1, where the group of RB pairs is a subband, an RBG, or a group of RB pairs that supports joint channel estimation reported in CSI.

The base station in this embodiment may be used to implement the technical solution in solution 3 according to the embodiment of the method shown in FIG. 1 during specific implementation. The implementation principle and technical effect thereof are similar, which are not repeated herein.

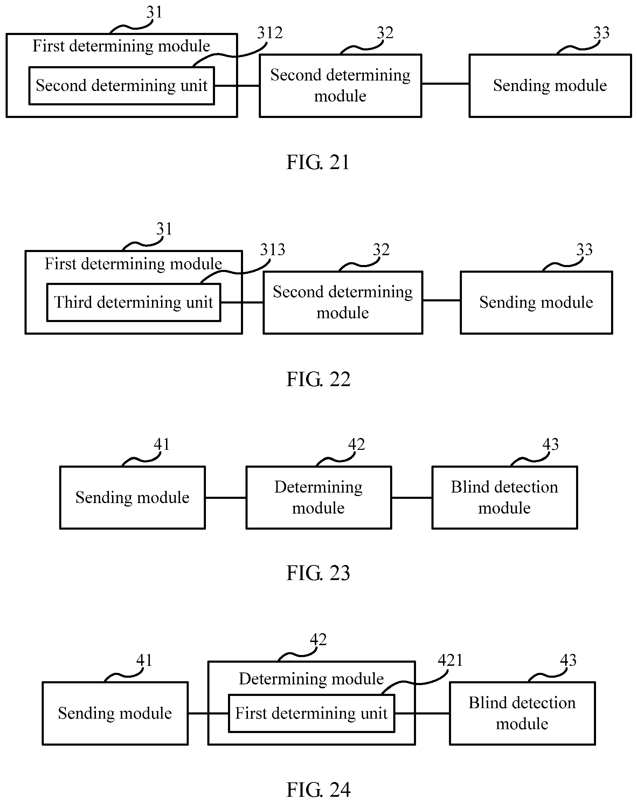

FIG. 21 is a schematic structural diagram of Embodiment 10 of a base station according to the present invention. As shown in FIG. 21, the base station in this embodiment is based on the base station shown in FIG. 19, and further, the first determining module 31 may include a second determining unit 312, configured to determine that the search space includes M successive localized candidate E-PDCCHs at aggregation level L.

The base station in this embodiment may be used to implement the technical solution in solution 2 according to the embodiment of the method shown in FIG. 3 during specific implementation. The implementation principle and technical effect thereof are similar, which are not repeated herein.

FIG. 22 is a schematic structural diagram of Embodiment 11 of a base station according to the present invention. As shown in FIG. 22, the base station in this embodiment is based on the base station shown in FIG. 19, and further, the first determining module 31 may include a third determining unit 313, configured to determine that the search space includes M non-successive localized candidate E-PDCCHs at aggregation level L.

The base station in this embodiment may be used to implement the technical solution in solution 3 according to the embodiment of the method shown in FIG. 3 during specific implementation. The implementation principle and technical effect thereof are similar, which are not repeated herein.

FIG. 23 is a schematic structural diagram of Embodiment 8 of a user equipment according to the present invention. As shown in FIG. 23, the UE in this embodiment may include: a receiving module 41, a determining module 42, and a blind detection module 43, where the receiving module 41 is configured to receive a subframe sent by a base station; the determining module 42 is configured to determine, in the subframe, a search space corresponding to a UE, where if the search space includes at least two localized candidate E-PDCCHs at a same aggregation level, the at least two localized candidate E-PDCCHs are mapped to RB pairs at different frequency positions; and the blind detection module 43 is configured to determine a DMRS port corresponding to the at least two localized candidate E-PDCCHs at a same aggregation level, perform channel estimation according to a reference signal of the determined DMRS port, perform a blind detection on the localized candidate E-PDCCHs in the search space according to a channel estimation result, and receive control information over a candidate E-PDCCH determined through the blind detection.

The UE in this embodiment may be used to implement the technical solution according to the embodiment of the method shown in FIG. 4. The implementation principle and technical effect thereof are similar, which are not repeated herein.

FIG. 24 is a schematic structural diagram of Embodiment 9 of a user equipment according to the present invention. As shown in FIG. 24, the UE in this embodiment is based on the UE shown in FIG. 23, and further, the determining module 42 may include a first determining unit 421, configured to determine that the search space includes at least two groups of RB pairs, at least two localized candidate E-PDCCHs at an aggregation level are mapped to the at least two groups of RB pairs, and a maximum difference value of the number of localized candidate E-PDCCHs mapped to each group of RB pairs is 1, where the group of RB pairs is a subband, an RBG, or a group of RB pairs that supports joint channel estimation reported in CSI.

The user equipment in this embodiment may be used to implement the technical solution in solution 1 according to the embodiment of the method shown in FIG. 4 during specific implementation. The implementation principle and technical effect thereof are similar, which are not repeated herein.

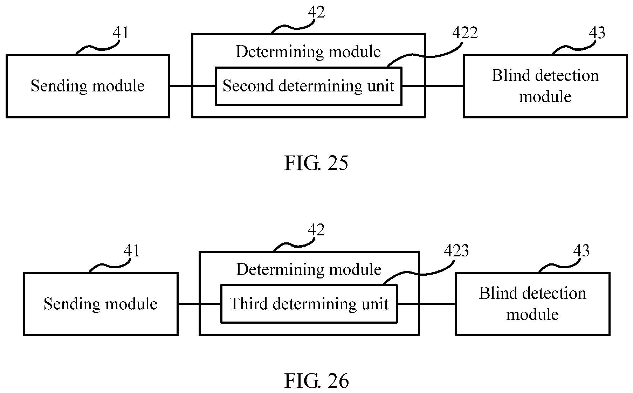

FIG. 25 is a schematic structural diagram of Embodiment 10 of a user equipment according to the present invention. As shown in FIG. 25, the UE in this embodiment is based on the UE shown in FIG. 23, and further, the determining module 42 may include a second determining unit 422, configured to determine that the search space includes M successive localized candidate E-PDCCHs at aggregation level L.

The user equipment in this embodiment may be used to implement the technical solution in solution 2 according to the embodiment of the method shown in FIG. 4 during specific implementation. The implementation principle and technical effect thereof are similar, which are not repeated herein.

FIG. 26 is a schematic structural diagram of Embodiment 11 of a user equipment according to the present invention. As shown in FIG. 26, the UE in this embodiment is based on the UE shown in FIG. 23, and further, the determining module 42 may include a third determining unit 423, configured to determine that the search space includes M non-successive localized candidate E-PDCCHs at aggregation level L.

The user equipment in this embodiment may be used to implement the technical solution in solution 3 according to the embodiment of the method shown in FIG. 4 during specific implementation. The implementation principle and technical effect thereof are similar, which are not repeated herein.

It should be noted that, during specific implementation, each module in the foregoing base station and user equipment may multiplex functional modules of an existing base station or user equipment for implementation. For example, in the foregoing embodiments of the base station, the base station may include a receiver, a transmitter, and at least one processor. Each functional module itself or a function thereof in the foregoing embodiments of the base station may be deployed on at least one processor for implementation. When the foregoing modules or corresponding functions thereof are implemented on a processor, a software manner may be used for implementation, and a hardware manner may be used for implementation, or a combined software and hardware manner is used for implementation, which is not limited in the foregoing embodiments.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention.

## Claims

1. A method for sending control information, comprising:
determining (101), in a subframe, a search space corresponding to a user equipment UE, wherein a plurality of localized candidate enhanced physical downlink control channels E-PDCCHs at a same aggregation level in the search space are mapped into a same resource block RB pair or a same group of adjacent RB pairs;
determining (102) a demodulation reference signal DMRS port required to be used by the plurality of localized candidate E-PDCCHs, wherein different DMRS ports correspond to different localized candidate E-PDCCHs; and
selecting (103) a candidate E-PDCCH from the search space to send control information, and sending a reference signal of a DMRS port corresponding to the selected candidate E-PDCCH,
**characterised in that** the determining a DMRS port required to be used by the one or more localized candidate E-PDCCHs comprises:
determining a mapping relationship between enhanced control channel element eCCEs of all RB pair resources used for the E-PDCCH and the DMRS port, and then determining the DMRS port used by a localized candidate E-PDCCH at the aggregation level,
where a DMRS port corresponding to the i^{th} eCCE is 7 + (i + σ) mod P, and σ is an offset value specific to the UE, and P is the number of available DMRS ports.

2. A method for receiving control information, comprising:
receiving (201) a subframe sent by a base station, and determining, in the subframe, a search space corresponding to a UE, wherein a plurality of localized candidate E-PDCCHs at a same aggregation level in the search space is mapped into a same RB pair or a same group of adjacent RB pairs;
determining (202) a DMRS port required to be used by the plurality of localized candidate E-PDCCHs, wherein different DMRS ports correspond to different localized candidate E-PDCCHs; and
performing (203) channel estimation according to a reference signal of the DMRS port determined to be used, performing a blind detection on the localized candidate E-PDCCH in the search space according to a channel estimation result, and receiving control information over a candidate E-PDCCH determined through the blind detection,
**characterised in that** the determining a DMRS port required to be used by the one or more localized candidate E-PDCCHs comprises:
determining a mapping relationship between enhanced control channel element eCCEs of all RB pair resources used for the E-PDCCH and the DMRS port, and then determining the DMRS port used by a localized candidate E-PDCCH at the aggregation level,
where a DMRS port corresponding to the i^{th} eCCE is 7 + (i + σ) mod P, and σ is an offset value specific to the UE, and P is the number of available DMRS ports.

3. A base station, comprising:
a first determining module (11), configured to determine, in a subframe, a search space corresponding to a user equipment UE, wherein a plurality of localized candidate E-PDCCHs at a same aggregation level in the search space are mapped into a same resource block RB pair or a same group of adjacent RB pairs;
a second determining module (12), configured to determine a demodulation reference signal DMRS port required to be used by the plurality of localized candidate E-PDCCHs, wherein different DMRS ports correspond to different localized candidate E-PDCCHs; and
a sending module (13), configured to select a candidate E-PDCCH from the search space to send control information, and send a reference signal of a DMRS port corresponding to the selected candidate E-PDCCH,
**characterised in that** the determining module is configured to determine the DMRS port required to be used by the one or more localized candidate E-PDCCHs by:
determining a mapping relationship between enhanced control channel element eCCEs of all RB pair resources used for the E-PDCCH and the DMRS port, and then determining the DMRS port used by a localized candidate E-PDCCH at the aggregation level,
where a DMRS port corresponding to the i^{th} eCCE is 7 + (i + σ) mod P, and σ is an offset value specific to the UE, and P is the number of available DMRS ports.

4. A user equipment, comprising:
a receiving module (21), configured to receive a subframe sent by a base station, and determine, in the subframe, a search space corresponding to a UE, wherein a plurality of localized candidate E-PDCCHs at a same aggregation level in the search space are mapped into a same RB pair or a same group of adjacent RB pairs;
a determining module (22), configured to determine a DMRS port required to be used by the plurality of localized candidate E-PDCCHs, wherein different DMRS ports correspond to different localized candidate E-PDCCHs; and
a blind detection module (23), configured to perform channel estimation according to a reference signal of the DMRS port determined to be used, perform a blind detection on the localized candidate E-PDCCH in the search space according to a channel estimation result, and receive control information over a candidate E-PDCCH determined through the blind detection,
**characterised in that** the determining module is configured to determine the DMRS port required to be used by the one or more localized candidate E-PDCCHs by:
determining a mapping relationship between enhanced control channel element eCCEs of all RB pair resources used for the E-PDCCH and the DMRS port, and then determining the DMRS port used by a localized candidate E-PDCCH at the aggregation level,
where a DMRS port corresponding to the i^{th} eCCE is 7 + (i + σ) mod P, and σ is an offset value specific to the UE, and P is the number of available DMRS ports.

## Patentansprüche

1. Verfahren zum Senden von Steuerinformation, umfassend:
Festlegen (101) eines Suchraums entsprechend einem Benutzer-Equipment UE in einem Unterrahmen, wobei eine Mehrzahl von lokalisierten Kandidaten-E-PDCCHs (erweiterten physikalischen Downlink-Steuerkanälen) auf einer gleichen Aggregationsebene im Suchraum in ein gleiches Ressourcenblock RB-Paar oder eine gleiche Gruppe benachbarter RB-Paare abgebildet wird;
Festlegen (102) eines Demodulations-Referenzsignal-DMRS-Ports, dessen Verwendung durch die Mehrzahl von lokalisierten Kandidaten-E-PDCCHs erforderlich ist, wobei unterschiedliche DMRS-Ports unterschiedlichen lokalisierten Kandidaten-E-PDCCHs entsprechen; und
Auswählen (103) eines Kandidaten-E-PDCCH aus dem Suchraum zum Senden von Steuerinformation, und Senden eines Referenzsignals eines DMRS-Ports entsprechend dem ausgewählten Kandidaten-E-PDCCH,
**dadurch gekennzeichnet, dass**
die Festlegung eines DMRS-Ports, dessen Verwendung durch den einen oder die mehreren lokalisierten Kandidaten-E-PDCCHs erforderlich ist, umfasst:
Bestimmen einer Abbildungsbeziehung zwischen erweiterten Steuerkanalelement eCCEs aller für den E-PDCCH und den DMRS-Port verwendeten RB-Paar-Ressourcen, und anschließendes Festlegen des durch einen lokalisierten Kandidaten-E-PDCCH verwendeten DMRS-Ports auf der Aggregationsebene,
wobei ein DMRS-Port entsprechend dem i-ten eCCE 7 + (i + σ) mod P ist und σ ein für das UE spezifischer Offset-Wert ist und P die Anzahl verfügbarer DMRS-Ports ist.

2. Verfahren zum Empfangen von Steuerinformation, umfassend:
Empfangen (201) eines durch eine Basisstation gesendeten Unterrahmens und Festlegen eines Suchraums im Unterrahmen entsprechend einem UE, wobei eine Mehrzahl von lokalisierten Kandidaten-E-PDCCHs auf einer gleichen Aggregationsebene im Suchraum in ein gleiches RB-Paar oder eine gleiche Gruppe benachbarter RB-Paare abgebildet wird;
Festlegung (202) eines DMRS-Ports, dessen Verwendung durch die Mehrzahl von lokalisierten Kandidaten-E-PDCCHs erforderlich ist, wobei unterschiedliche DMRS-Ports unterschiedlichen lokalisierten Kandidaten-E-PDCCHs entsprechen; und
Durchführen (203) von Kanalschätzung gemäß einem Referenzsignal des DMRS-Ports, dessen Verwendung festgelegt worden ist, Durchführen einer Blinddetektion am lokalisierten Kandidaten-E-PDCCH im Suchraum entsprechend einem Ergebnis einer Kanalschätzung und Empfangen von Steuerinformation über einen durch die Blinddetektion festgelegten Kandidaten-E-PDCCH,
**dadurch gekennzeichnet, dass**
die Festlegung eines DMRS-Ports, dessen Verwendung durch den einen oder die mehreren lokalisierten Kandidaten-E-PDCCHs erforderlich ist, umfasst:
Festlegen einer Abbildungsbeziehung zwischen erweiterten Steuerkanalelement eCCEs aller für den E-PDCCH und den DMRS-Port verwendeten RB-Paar-Ressourcen, und anschließendes Festlegen des durch einen lokalisierten Kandidaten-E-PDCCH verwendeten DMRS-Ports auf der Aggregationsebene,
wobei ein DMRS-Port entsprechend dem i-ten eCCE 7 + (i + σ) mod P ist und σ ein für das UE spezifischer Offset-Wert ist und P die Anzahl verfügbarer DMRS-Ports ist.

3. Basisstation, umfassend:
ein erstes Bestimmungsmodul (11), ausgelegt zum Festlegen eines Suchraums entsprechend einem Benutzer-Equipment UE in einem Unterrahmen, wobei eine Mehrzahl von lokalisierten Kandidaten-E-PDCCHs auf einer gleichen Aggregationsebene im Suchraum in ein gleiches Ressourcenblock RB-Paar oder eine gleiche Gruppe benachbarter RB-Paare abgebildet wird;
ein zweites Bestimmungsmodul (12), ausgelegt zum Festlegen eines Demodulations-Referenzsignal-DMRS-Ports, dessen Verwendung durch die Mehrzahl von lokalisierten Kandidaten-E-PDCCHs erforderlich ist, wobei unterschiedliche DMRS-Ports unterschiedlichen lokalisierten Kandidaten-E-PDCCHs entsprechen; und
ein Sendemodul (13), ausgelegt zum Auswählen eines Kandidaten-E-PDCCH aus dem Suchraum zum Senden von Steuerinformation, und Senden eines Referenzsignals eines DMRS-Ports entsprechend dem ausgewählten Kandidaten-E-PDCCH,
**dadurch gekennzeichnet, dass**
das Bestimmungsmodul ausgelegt ist zum Bestimmen des DMRS-Ports, dessen Verwendung durch den einen oder die mehreren lokalisierten Kandidaten-E-PDCCHs erforderlich ist, durch:
Bestimmen einer Abbildungsbeziehung zwischen erweiterten Steuerkanalelement eCCEs aller für den E-PDCCH und den DMRS-Port verwendeten RB-Paar-Ressourcen, und anschließendes Festlegen des durch einen lokalisierten Kandidaten-E-PDCCH verwendeten DMRS-Ports auf der Aggregationsebene,
wobei ein DMRS-Port entsprechend dem i-ten eCCE 7 + (i + σ) mod P ist und σ ein für das UE spezifischer Offset-Wert ist und P die Anzahl verfügbarer DMRS-Ports ist.

4. Benutzer-Equipment, umfassend:
ein Empfangsmodul (21), ausgelegt zum Empfangen eines durch eine Basisstation gesendeten Unterrahmens und Festlegen eines Suchraums im Unterrahmen entsprechend einem UE, wobei eine Mehrzahl von lokalisierten Kandidaten-E-PDCCHs auf einer gleichen Aggregationsebene im Suchraum in ein gleiches RB-Paar oder eine gleiche Gruppe benachbarter RB-Paare abgebildet wird;
ein Bestimmungsmodul (22), ausgelegt zum Festlegen eines DMRS-Ports, dessen Verwendung durch die Mehrzahl von lokalisierten Kandidaten-E-PDCCHs erforderlich ist, wobei unterschiedliche DMRS-Ports unterschiedlichen lokalisierten Kandidaten-E-PDCCHs entsprechen; und
ein Blinddetektionsmodul (23), ausgelegt zum Durchführen von Kanalschätzung gemäß einem Referenzsignal des DMRS-Ports, dessen Verwendung festgelegt worden ist, Durchführen einer Blinddetektion am lokalisierten Kandidaten-E-PDCCH im Suchraum entsprechend einem Ergebnis einer Kanalschätzung und Empfangen von Steuerinformation über einen durch die Blinddetektion festgelegten Kandidaten-E-PDCCH,
**dadurch gekennzeichnet, dass**
das Bestimmungsmodul dafür ausgelegt ist, den DMRS-Port, dessen Verwendung durch den einen oder die mehreren lokalisierten Kandidaten-E-PDCCHs erforderlich ist, zu bestimmen durch:
Festlegen einer Abbildungsbeziehung zwischen erweiterten Steuerkanalelement eCCEs aller für den E-PDCCH und den DMRS-Port verwendeten RB-Paar-Ressourcen, und anschließendes Festlegen des durch einen lokalisierten Kandidaten-E-PDCCH verwendeten DMRS-Ports auf der Aggregationsebene,
wobei ein DMRS-Port entsprechend dem i-ten eCCE 7 + (i + σ) mod P ist und σ ein für das UE spezifischer Offset-Wert ist und P die Anzahl verfügbarer DMRS-Ports ist.

## Revendications

1. Procédé d'envoi d'informations de contrôle, comprenant :
la détermination (101), dans une sous-trame, d'un espace de recherche correspondant à un équipement utilisateur UE, une pluralité de canaux de contrôle de liaison physique descendante évolués candidats localisés E-PDCCH à un même niveau d'agrégation dans l'espace de recherche étant mise en correspondance avec une même paire de blocs de ressources RB ou un même groupe de paires RB adjacentes ;
la détermination (102) d'un port de signal de référence de démodulation DMRS devant être utilisé par la pluralité d'E-PDCCH candidats localisés, différents ports DMRS correspondant à différents E-PDCCH candidats localisés ; et
la sélection (103) d'un E-PDCCH candidat à partir de l'espace de recherche pour envoyer des informations de contrôle, et l'envoi d'un signal de référence d'un port DMRS correspondant à l'E-PDCCH candidat sélectionné,
**caractérisé en ce que**
la détermination d'un port DMRS devant être utilisé par le ou les E-PDCCH candidats localisés comprend :
la détermination d'une relation de mise en correspondance entre élément de canal de contrôle évolué eCCE de toutes les ressources de paires RB utilisées pour l'E-PDCCH et le port DMRS, puis la détermination du port DMRS utilisé par un E-PDCCH candidat localisé au niveau d'agrégation,
un port DMRS correspondant au i^{ième} eCCE étant 7 + (i + σ) mod P, et σ étant une valeur de décalage spécifique de l'UE, et P étant le nombre de ports DMRS disponibles.

2. Procédé de réception d'informations de contrôle, comprenant :
la réception (201) d'une sous-trame envoyée par une station de base, et la détermination, dans la sous-trame, d'un espace de recherche correspondant à un UE, une pluralité d'E-PDCCH candidats localisés à un même niveau d'agrégation dans l'espace de recherche étant mise en correspondance avec une même paire RB ou un même groupe de paires RB adjacentes ;
la détermination (202) d'un port DMRS devant être utilisé par la pluralité d'E-PDCCH candidats localisés, différents ports DMRS correspondant à différents E-PDCCH candidats localisés ; et
la réalisation (203) d'une estimation de canal en fonction d'un signal de référence du port DMRS déterminé comme devant être utilisé, la réalisation d'une détection en aveugle sur l'E-PDCCH candidat localisé dans l'espace de recherche en fonction d'un résultat d'estimation de canal, et la réception d'informations de contrôle sur un E-PDCCH candidat déterminé par la détection en aveugle,
**caractérisé en ce que**
la détermination d'un port DMRS devant être utilisé par le ou les E-PDCCH candidats localisés comprend :
la détermination d'une relation de mise en correspondance entre élément de canal de contrôle évolué eCCE de toutes les ressources de paires RB utilisées pour l'E-PDCCH et le port DMRS, puis la détermination du port DMRS utilisé par un E-PDCCH candidat localisé au niveau d'agrégation,
un port DMRS correspondant au i^{ième} eCCE étant 7 + (i + σ) mod P, et σ étant une valeur de décalage spécifique de l'UE, et P étant le nombre de ports DMRS disponibles.

3. Station de base, comprenant :
un premier module de détermination (11), configuré pour déterminer, dans une sous-trame, un espace de recherche correspondant à un équipement utilisateur UE, une pluralité d'E-PDCCH candidats localisés à un même niveau d'agrégation dans l'espace de recherche étant mis en correspondance avec une même paire de blocs de ressources RB ou un même groupe de paires RB adjacentes ;
un deuxième module de détermination (12), configuré pour déterminer un port de signal de référence de démodulation DMRS devant être utilisé par la pluralité d'E-PDCCH candidats localisés, différents ports DMRS correspondant à différents E-PDCCH candidats localisés ; et
un module d'envoi (13), configuré pour sélectionner un E-PDCCH candidat à partir de l'espace de recherche pour envoyer des informations de contrôle, et l'envoi d'un signal de référence d'un port DMRS correspondant à l'E-PDCCH candidat sélectionné,
**caractérisée en ce que**
le module de détermination est configuré pour déterminer le port DMRS devant être utilisé par le ou les E-PDCCH candidats localisés :
en déterminant une relation de mise en correspondance entre élément de canal de contrôle évolué eCCE de toutes les ressources de paires RB utilisées pour l'E-PDCCH et le port DMRS, puis en déterminant le port DMRS utilisé par un E-PDCCH candidat localisé au niveau d'agrégation,
un port DMRS correspondant au i^{ième} eCCE étant 7 + (i + σ) mod P, et σ étant une valeur de décalage spécifique de l'UE, et P étant le nombre de ports DMRS disponibles.

4. Équipement utilisateur, comprenant :
un module de réception (21), configuré pour recevoir une sous-trame envoyée par une station de base, et déterminer, dans la sous-trame, un espace de recherche correspondant à l'UE, une pluralité d'E-PDCCH candidats localisés à un même niveau d'agrégation dans l'espace de recherche étant mis en correspondance avec une même paire RB ou un même groupe de paires RB adjacentes ;
un module de détermination (22), configuré pour déterminer un port DMRS devant être utilisé par la pluralité d'E-PDCCH candidats localisés, différents ports DMRS correspondant à différents E-PDCCH candidats localisés ; et
un module de détection en aveugle (23), configuré pour réaliser une estimation de canal en fonction d'un signal de référence du port DMRS déterminé comme devant être utilisé, réaliser une détection en aveugle sur l'E-PDCCH candidat localisé dans l'espace de recherche en fonction d'un résultat d'estimation de canal, et recevoir des informations de contrôle sur un E-PDCCH candidat déterminé par la détection en aveugle,
**caractérisé en ce que**
le module de détermination est configuré pour déterminer le port DMRS devant être utilisé par le ou les E-PDCCH candidats localisés :
en déterminant une relation de mise en correspondance entre élément de canal de contrôle évolué eCCE de toutes les ressources de paires RB utilisées pour l'E-PDCCH et le port DMRS, puis en déterminant le port DMRS utilisé par un E-PDCCH candidat localisé au niveau d'agrégation,
un port DMRS correspondant au i^{ième} eCCE étant 7 + (i + σ) mod P, et σ étant une valeur de décalage spécifique de l'UE, et P étant le nombre de ports DMRS disponibles.
